# EUROPEAN PATENT APPLICATION

(11) **EP 2 876 840 A1**
(43) Date of publication of application: **27.05.2015**
(21) Application number: 13831269.9
(22) Date of filing: 09.06.2013
(51) Int. Cl.: H04L 12/18

(54) **MULTICAST INFORMATION TRANSMISSION METHOD AND DEVICE**

(30) Priority: 22.08.2012 CN 201210300748
(71) Applicant: Huawei Technologies Co., Ltd., Longgang District Shenzhen, Guangdong 518129 (CN)
(72) Inventor: ZHAO, Mu, Shenzhen Guangdong 518129 (CN); JIANG, Yanping, Shenzhen Guangdong 518129 (CN); ZHEN, Bin, Shenzhen Guangdong 518129 (CN)
(74) Representative: Pfenning, Meinig & Partner GbR
(86) International application number: PCT/CN2013/077055
(87) International publication number: WO 2014/029226

(57) **Abstract**

Embodiments of the present invention provide a multicast information transmission method and device. The method includes: sending a delivery traffic indication map DTIM beacon frame to a station STA, where the DTIM beacon frame is used to indicate multicast groups which have multicast information to be sent; and according to an order of a multicast identifier ID of the multicast groups which have multicast information to be sent, in preset sending intervals, sending multicast information of the multicast groups which have multicast information to be sent, so that the STA receives multicast information of a multicast group to which the STA belongs in a receiving interval corresponding to the multicast group to which the STA belongs. The technical solutions in the present invention reduce STA resource waste.

## Description

### TECHNICAL FIELD

The present invention relates to the communications technologies, and in particular, to a multicast information transmission method and device.

### BACKGROUND

In an 802.11 ah application scenario, up to 6000 sensor stations (Station, STA for short) can be supported. For example, the STAs may be set on a water meter, electricity meter, or a gas meter, respectively. The water meter, the electricity meter, or the gas meter may belong to same or different water retailers, electricity retailers, and gas retailers. The same or different water retailers, electricity retailers, and gas retailers may send information to the water meter, the electricity meter, and the gas meter respectively at same or different cycles through a radio access point (Access Point, AP for short), or update the water meter, the electricity meter, and the gas meter at any time as required. The above application scenario indicates that in an 802.11ah scenario, each AP needs to send multicast information of different cycles and different contents to different STAs.

In the prior art, the STA works in an ordinary mode at the beginning. In the ordinary working mode, the STA receives each beacon frame (English: Beacon) that includes a delivery traffic indication map (Delivery Traffic Indication Map, DTIM for short). The DTIM indicates which multicast groups will send downlink data. If a multicast group to which the STA belongs has downlink data readily to be sent, the STA receives all multicast information after this beacon frame, and then selects multicast information of the multicast group to which the STA belongs from the information. To reduce the number of times of snooping performed by the STA for beacon frames, a flexible multicast service (Flexible Multicast Service, FMS for short) mode is put forward. In the FMS mode, the STA negotiates with the AP beforehand to determine which multicast cycle to use. The STA receives the multicast information according to the multicast cycle determined through negotiation, but the AP uses an 8-bit FMS ID in the beacon frame to identify a multicast cycle to which the multicast information that is about to be sent belongs. Such a manner reduces the number of times of snooping performed by the STA for the beacon frame, but once the STA receives a beacon frame, the STA also needs to receive all multicast information after the beacon frame and then select multicast information corresponding to the STA from the information. Therefore, no matter in which mode the STA is working, the STA has the problem of resource waste.

### SUMMARY

Embodiments of the present invention provide a multicast information transmission method and device, which are used to reduce STA resource waste.

In a first aspect, an embodiment of the present invention provides a multicast information sending method, including:
sending a delivery traffic indication map DTIM beacon frame to a station STA, where the DTIM beacon frame is used to indicate multicast groups which have multicast information to be sent; and
according to an order of a multicast identifier ID of the multicast groups which have the multicast information to be sent, in preset sending intervals, sending the multicast information of the multicast groups which have the multicast information to be sent, so that the STA receives multicast information of a multicast group to which the STA belongs in a receiving interval corresponding to the multicast group to which the STA belongs.

In an optional implementation manner of the first aspect, before the sending a delivery traffic indication map DTIM beacon frame to a station STA, the method further includes: sending the multicast ID of the multicast group to which the STA belongs to the STA.

In an optional implementation manner of the first aspect, before the sending the multicast ID of the multicast group to which the STA belongs to the STA, the method further includes: mapping the multicast ID of the multicast group to which the STA belongs to an association identifier AID.

In an optional implementation manner of the first aspect, the DTIM beacon frame being used to indicate the multicast groups which have the multicast information to be sent includes: using a partial virtual bitmap in the DTIM beacon frame to indicate the multicast groups which have the multicast information to be sent.

In an optional implementation manner of the first aspect, the preset sending interval is average sending duration of multicast information or a beacon frame interval.

In a second aspect, an embodiment of the present invention provides a multicast information receiving method, including:
receiving, by a station STA, a delivery traffic indication map DTIM beacon frame sent by a radio access point AP, where the DTIM beacon frame is used to indicate multicast groups which have multicast information to be sent; and
receiving, by the STA according to an order of a multicast identifier ID of a multicast group to which the STA belongs in multicast IDs of the multicast groups which have the multicast information to be sent, the multicast information of the multicast group to which the STA belongs from the AP in a receiving interval corresponding to the multicast group to which the STA belongs.

In an optional implementation manner of the second aspect, the receiving interval is average sending duration of multicast information or a beacon frame interval.

In an optional implementation manner of the second aspect, a multicast ID of each multicast group which has multicast information to be sent is an association identifier AID.

In a third aspect, an embodiment of the present invention provides a multicast identifier sending method, including:
determining a multicast identifier ID of a multicast group to which a station STA belongs, where the multicast ID of the multicast group to which the STA belongs is mapped to an association identifier AID; and
sending the multicast ID of the multicast group to which the STA belongs to the STA.

In an optional implementation manner of the third aspect, the mapping the multicast ID of the multicast group to which the STA belongs to an AID includes: mapping the multicast ID of the multicast group to which the STA belongs into a page, a block, or a sub-block in the AID; or mapping the multicast ID of the multicast group to which the STA belongs into blocks and sub-blocks in at least two AIDs.

In an optional implementation manner of the third aspect, the sending the multicast ID of the multicast group to which the STA belongs to the STA includes: encapsulating the multicast ID of the multicast group to which the STA belongs into a management frame or a control frame, and sending the frame to the STA; or adding a new information element IE into an existing management frame or an existing control frame or an existing data frame, and encapsulating the multicast ID of the multicast group to which the STA belongs into the new IE and sending the existing management frame or the existing control frame or the existing data frame to the STA.

In a fourth aspect, an embodiment of the present invention provides a multicast identifier receiving method, including:
receiving, by a station STA, a multicast identifier ID of a multicast group to which the STA belongs from a radio access point AP, where the multicast ID of the multicast group to which the STA belongs is mapped to an association identifier AID; and
recording, by the STA, the multicast ID of the multicast group to which the STA belongs.

In an optional implementation manner of the fourth aspect, the receiving, by the station STA, the multicast identifier ID of the multicast group to which the STA belongs from the radio access point AP includes: receiving, by the STA, a management frame or a control frame sent by the AP, where the management frame or the control frame includes the multicast ID of the multicast group to which the STA belongs; or receiving, by the STA, an existing management frame or an existing control frame or an existing data frame sent by the AP, where a new information element IE in the existing management frame or the existing control frame or the existing data frame includes the multicast ID of the multicast group to which the STA belongs.

In an optional implementation manner of the fourth aspect, the receiving, by the station STA, the multicast identifier ID of the multicast group to which the STA belongs from the radio access point AP includes: sending, by the STA, information for requesting the multicast ID to the AP; and receiving, by the STA, the multicast ID of the multicast group to which the STA belongs, where the multicast ID is sent by the AP according to the information for requesting the multicast ID.

In a fifth aspect, an embodiment of the present invention provides a radio access point AP, including: a first sending module, configured to send a delivery traffic indication map DTIM beacon frame to a station STA, where the DTIM beacon frame is used to indicate multicast groups which have multicast information to be sent; and
a second sending module, configured to: according to an order of a multicast identifier ID of the multicast groups which have multicast information to be sent, in preset sending intervals, send the multicast information of the multicast groups which have multicast information to be sent, so that the STA receives multicast information of a multicast group to which the STA belongs in a receiving interval corresponding to the multicast group to which the STA belongs.

In an optional implementation manner of the fifth aspect, the AP further includes: a third sending module, configured to send the multicast ID of the multicast group to which the STA belongs to the STA before the first sending module sends the DTIM beacon frame to the STA.

In an optional implementation manner of the fifth aspect, the AP further includes: a mapping module, configured to map the multicast ID of the multicast group to which the STA belongs to an association identifier AID before the third sending module sends the multicast ID of the multicast group to which the STA belongs to the STA.

In an optional implementation manner of the fifth aspect, the DTIM beacon frame being used to indicate multicast groups which have multicast information to be sent includes: using a partial virtual bitmap in the DTIM beacon frame to indicate the multicast groups which have multicast information to be sent.

In a sixth aspect, an embodiment of the present invention provides a station STA, including:
a fifth receiving module, configured to receive a delivery traffic indication map DTIM beacon frame sent by a radio access point AP, where the DTIM beacon frame is used to indicate multicast groups which have multicast information to be sent; and
a sixth receiving module, configured to receive, according to an order of a multicast identifier ID of a multicast group to which the STA belongs in multicast IDs of the multicast groups which have multicast information to be sent, multicast information of the multicast group to which the STA belongs from the AP in a receiving interval corresponding to the multicast group to which the STA belongs.

In an optional implementation manner of the sixth aspect, the receiving interval is average sending duration of multicast information or a beacon frame interval.

In an optional implementation manner of the sixth aspect, a multicast ID of each multicast group which has multicast information to be sent is an association identifier AID.

In a seventh aspect, an embodiment of the present invention provides a radio access point AP, including:
a determining module, configured to determine a multicast identifier ID of a multicast group to which a station STA belongs, where the multicast ID of the multicast group to which the STA belongs is mapped to an association identifier AID; and
a tenth sending module, configured to send the multicast ID of the multicast group to which the STA belongs to the STA.

In an optional implementation manner of the seventh aspect, the determining module being configured to map the multicast ID of the multicast group to which the STA belongs to an AID includes: the determining module being specifically configured to map the multicast ID of the multicast group to which the STA belongs into any page, block, or sub-block in the AID; or map the multicast ID of the multicast group to which the STA belongs into blocks and sub-blocks in at least two AIDs.

In an optional implementation manner of the seventh aspect, the tenth sending module is specifically configured to encapsulate the multicast ID of the multicast group to which the STA belongs into a management frame or a control frame, and send the frame to the STA; or
the tenth sending module is specifically configured to add a new information element IE into a management frame or a control frame or a data frame, and encapsulate the multicast ID of the multicast group to which the STA belongs into the new IE and send the management frame or the control frame or the data frame to the STA.

In an optional implementation manner of the seventh aspect, the AP further includes: a tenth receiving module, configured to receive information for requesting the multicast ID sent by the STA, where
the tenth sending module is specifically configured to send the multicast ID of the multicast group to which the STA belongs to the STA according to the information for requesting the multicast ID.

In an eighth aspect, an embodiment of the present invention provides a station STA, including:
a fourteenth receiving module, configured to receive a multicast identifier ID of a multicast group to which the STA belongs from a radio access point AP, where the multicast ID of the multicast group to which the STA belongs is mapped to an association identifier AID; and
a storage module, configured to record the multicast ID of the multicast group to which the STA belongs.

In an optional implementation manner of the eighth aspect, the fourteenth receiving module is specifically configured to receive a management frame or a control frame sent by the AP, where the management frame or the control frame includes the multicast ID of the multicast group to which the STA belongs; or
the fourteenth receiving module is specifically configured to receive an existing management frame or an existing control frame or an existing data frame sent by the AP, where a new information element IE in the existing management frame or the existing control frame or the existing data frame includes the multicast ID of the multicast group to which the STA belongs.

In an optional implementation manner of the eighth aspect, the STA further includes:
a thirteenth sending module, configured to send information for requesting the multicast ID to the AP, where
the fourteenth receiving module is specifically configured to receive the multicast ID of the multicast group to which the STA belongs, where the multicast ID is sent by the AP according to the information for requesting the multicast ID.

In the multicast information sending and receiving method and device that are provided in the embodiments of the present invention, the DTIM beacon frame is used to indicate the multicast groups which have multicast information to be sent; according to the order of the multicast IDs of the multicast groups which have multicast information to be sent, in the sending intervals, the AP sends the multicast information of the multicast groups which have multicast information to be sent; and the STA receives, according to the order of the multicast ID of the multicast group to which the STA belongs in multicast IDs of multicast groups which have multicast information to be sent, the multicast information of the multicast group to which the STA belongs in the corresponding receiving interval, thereby solving the problem that each STA receives all multicast information after a beacon frame in the prior art, and reducing STA resource waste caused by the problem.

In the multicast identifier sending and receiving method and device that are provided in the embodiments of the present invention, an AID is used as a multicast ID of a multicast group, and the AP sends the multicast ID of the multicast group to which the STA belongs to the STA, so that the STA can obtain the multicast ID of the multicast group to which the STA belongs. With the AID serving as the multicast ID and by virtue of abundance of AID resources, the problem of restricted multicast applications caused by limited number of multicast cycles supported by an FSM ID in the prior art is solved to some extent.

### BRIEF DESCRIPTION OF DRAWINGS

To illustrate the technical solutions in the embodiments of the present invention or in the prior art more clearly, the following briefly introduces the accompanying drawings required for describing the embodiments or the prior art. Apparently, the accompanying drawings in the following description show merely some embodiments of the present invention, and persons of ordinary skill in the art may still derive other drawings from these accompanying drawings without creative efforts.
FIG. 1 is a flowchart of a multicast information sending method according to an embodiment of the present invention;
FIG 2 is a flowchart of a multicast information sending method according to another embodiment of the present invention;
FIG 3 is a schematic structural diagram of an AID according to an embodiment of the present invention;
FIG 4 is a flowchart of a multicast information receiving method according to an embodiment of the present invention;
FIG 5 is a schematic diagram of an order of receiving multicast information according to an embodiment of the present invention;
FIG 6 is a schematic diagram of another order of receiving multicast information according to an embodiment of the present invention;
FIG 7 is a flowchart of a multicast information receiving method according to another embodiment of the present invention;
FIG 8 is a flowchart of a multicast identifier sending method according to an embodiment of the present invention;
FIG 9 is a flowchart of a multicast identifier receiving method according to an embodiment of the present invention;
FIG 10 is a schematic structural diagram of an AP according to an embodiment of the present invention;
FIG 11 is a schematic structural diagram of an AP according to another embodiment of the present invention;
FIG 12 is a schematic structural diagram of an AP according to still another embodiment of the present invention;
FIG 13 is a schematic structural diagram of a STA according to an embodiment of the present invention;
FIG 14 is a schematic structural diagram of a STA according to another embodiment of the present invention;
FIG 15 is a schematic structural diagram of a STA according to still another embodiment of the present invention;
FIG 16 is a schematic structural diagram of an AP according to still another embodiment of the present invention;
FIG. 17 is a schematic structural diagram of an AP according to still another embodiment of the present invention;
FIG. 18 is a schematic structural diagram of an AP according to still another embodiment of the present invention;
FIG. 19 is a schematic structural diagram of a STA according to still another embodiment of the present invention;
FIG 20 is a schematic structural diagram of a STA according to still another embodiment of the present invention; and
FIG 21 is a schematic structural diagram of a STA according to still another embodiment of the present invention.

### DESCRIPTION OF EMBODIMENTS

To make the objectives, technical solutions, and advantages of the embodiments of the present invention more comprehensible, the following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by persons of ordinary skill in the art based on the embodiments of the present invention without creative efforts shall fall within the protection scope of the present invention.

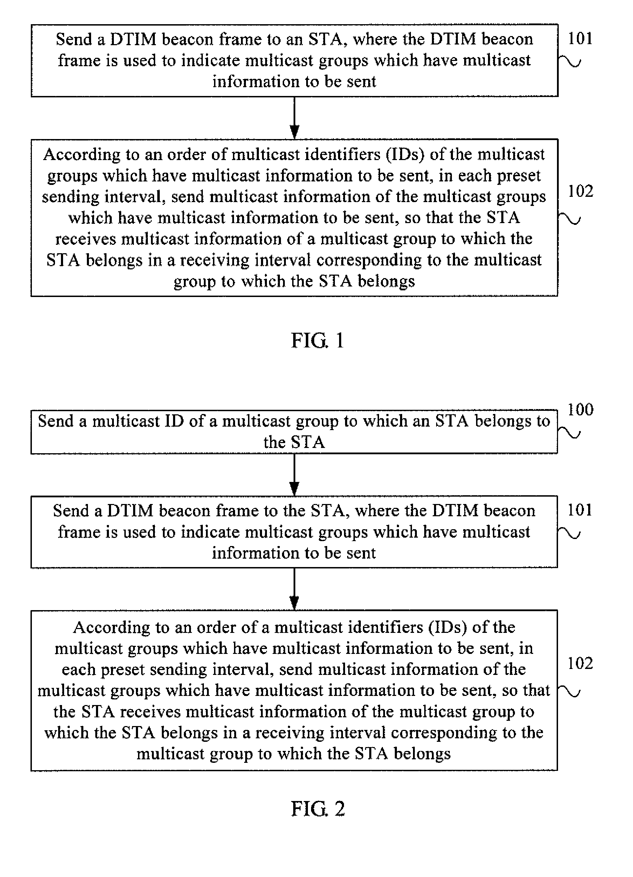

FIG 1 is a flowchart of a multicast information sending method according to an embodiment of the present invention. The entity for implementing this embodiment may be, but not limited to, an AP. As shown in FIG. 1, the method in this embodiment includes the following steps:

Step 101: Send a DTIM beacon frame to a STA, where the DTIM beacon frame is used to indicate multicast groups which have multicast information to be sent.

Step 102: According to an order of a multicast identifier (Identifier, ID for short) of the multicast groups which have multicast information to be sent, in each preset sending interval, send the multicast information of the multicast groups which have multicast information to be sent, so that the STA receives multicast information of a multicast group to which the STA belongs in a receiving interval corresponding to the multicast group to which the STA belongs.

In each embodiment of the present invention, the order of the multicast IDs may be a descending order or an ascending order. An order of the multicast IDs applied when the AP performs the sending is the same as an order of the multicast IDs applied when the STA performs the receiving, that is, both the sending and receiving are in descending order, or both are in ascending order.

In this embodiment, each multicast group has a multicast ID used to uniquely identify the multicast group. Multicast information of each multicast group which has multicast information to be sent is stored on the AP. When the AP needs to send multicast information to the STA in at least one multicast group, the AP sends a beacon frame to the STA first, where a type indication bit in the beacon frame indicates that the beacon frame is a DTIM beacon frame. In one aspect, the DTIM beacon frame indicates that the multicast information will be sent after the DTIM beacon frame, and in the other aspect, indicates the multicast groups which have multicast information to be sent. Then, according to the order of the multicast IDs of the multicast groups which have multicast information to be sent, in each sending interval, the AP sends the multicast information of the multicast groups. Therefore, according to the multicast ID of the multicast group to which the STA belongs, the STA can receive the multicast information of the multicast group to which the STA belongs in the corresponding receiving interval, but without receiving multicast information of other multicast groups, thereby solving the problem that the STA needs to receive all multicast information after a beacon frame after receiving the beacon frame in the prior art, and reducing STA resource waste caused by the problem, which is especially suitable for a STA that requires low power consumption.

In an optional implementation manner, the preset sending interval may be average sending duration of the multicast information. Therefore, after sending a DTIM beacon frame to the STA, the AP specifically allocates a time as a sending interval to each multicast group which has multicast information to be sent, and the time is the average sending duration of the multicast information and is allocated according to the order of the multicast ID of the multicast group which has multicast information to be sent. In the allocated sending interval, the multicast information of the corresponding multicast group is sent. In this way, the multicast information of the multicast group is sent according to the order of the multicast ID.

Optionally, the average sending duration of the multicast information may be a preset empiric value. In addition, the average sending duration of the multicast information may also be calculated according to the size of the multicast information to be sent by each multicast group and the sending rate after the AP determines a multicast group which have multicast information to be sent and before the multicast information is sent.

In an optional implementation manner, the sending interval may be a beacon frame interval (English: Beacon Interval), where the beacon frame interval refers to an interval between two beacon frames. The beacon frame here includes a TIM beacon frame whose indication bit is traffic indication map (Traffic Indication Map, TIM for short), and also includes a DTIM beacon frame. In this implementation manner, the AP may send a TIM beacon frame after a current DTIM beacon frame and before a next DTIM beacon frame, and therefore, the AP sending the multicast information of the multicast group after the current DTIM beacon frame may specifically be: The AP sends the multicast information of the multicast group after the current DTIM beacon frame and a TIM beacon frame between the current DTIM beacon frame and the next DTIM beacon frame. In other words, the AP may send the multicast information of the multicast group after the DTIM beacon frame, or send the multicast information of the multicast group after the TIM beacon frame ahead of the next DTIM beacon frame.

It should be noted that, the number of TIM beacon frames sent by the AP between two DTIM beacon frames may be determined adaptively. If the number of TIM beacon frames between two DTIM beacon frames is greater than or equal to the number of multicast groups which have multicast information to be sent. Preferably, the AP may send multicast information of a multicast group after each TIM beacon frame, which is not limited thereto. If the number of TIM beacon frames between two DTIM beacon frames is less than the number of multicast groups which have multicast information to be sent, the AP may send multicast information of at least two multicast groups simultaneously after one of the TIM beacon frames or the current DTIM beacon frame to ensure that the multicast information of each multicast group can be sent to the STA successfully.

FIG. 2 is a flowchart of a multicast information sending method according to another embodiment of the present invention. This embodiment is implemented based on the embodiment shown in FIG. 1. As shown in FIG 2, before step 101, the method in this embodiment includes the following steps:

Step 100: Send the multicast ID of the multicast group to which the STA belongs to the STA.

Before the AP sends the multicast information of the multicast group to the STA according to the order of the multicast ID of each multicast group which has multicast information to be sent, the AP may send the multicast ID of the multicast group to which the STA belongs to the STA, and therefore, the STA knows the multicast ID of the multicast group to which the STA belongs beforehand, and then receives the multicast information of the multicast group to which the STA belongs in a receiving interval corresponding to the multicast ID of the multicast group to which the STA belongs. The STA stores the received multicast ID of the multicast group to which the STA belongs locally.

In an optional implementation manner, the AP may initiate allocation of the multicast ID proactively, that is, the AP sends the multicast ID of the multicast group to which the STA belongs to the STA proactively.

In another optional implementation manner, the STA may request the multicast ID of the multicast group to which the STA belongs from the AP proactively. Therefore, an implementation manner of step 101 includes: The AP receives information for requesting the multicast ID sent by the STA, and the AP sends the multicast ID of the multicast group to which the STA belongs to the STA according to the received information for requesting the multicast ID. The information for requesting the multicast ID sent by the STA may be a Media Access Control (Media Access Control, MAC for short) address or an IP address of the STA, or other information that can uniquely identify the STA. The AP identifies the STA according to the information for requesting the multicast ID sent by the STA, and then determines the multicast ID of the multicast group to which the STA belongs. Optionally, after receiving the information for requesting the multicast ID, the AP may allocate the multicast ID to the STA in real time, or obtain a pre-allocated multicast ID directly.

In this implementation manner, the STA may send the information for requesting the multicast ID to the AP in the following specific implementation manner: The STA encapsulates the information for requesting the multicast ID into a request message, and send the request message to the AP. For the AP, a specific manner of receiving the information for requesting the multicast ID sent by the STA is: The AP receives the request message sent by the STA, where the request message includes the information for requesting the multicast ID, and, specifically, from the request message, the AP obtains the information for requesting the multicast ID. Optionally, the request message may be a new message.

In this implementation manner, the STA may send the information for requesting the multicast ID to the AP in another specific implementation manner: The STA adds a new information element (Information Element, IE for short) into an existing control frame or an existing management frame or an existing data frame, and encapsulates the information for requesting the multicast ID into the new IE and sends the existing control frame or the existing management frame or the existing data frame to the AP. For the AP, a specific manner of receiving the information for requesting the multicast ID sent by the STA is: The AP receives the existing control frame or the existing management frame or the existing data frame sent by the STA, where the new IE in the existing control frame or the existing management frame or the existing data frame includes the information for requesting the multicast ID; and specifically, the AP obtains the information for requesting the multicast ID from the new IE in the existing control frame or the existing management frame or the existing data frame.

In an optional implementation manner, the AP may send the multicast ID of the multicast group to which the STA belongs to the STA in the following specific implementation manner: The AP encapsulates the multicast ID of the multicast group to which the STA belongs into a new management frame or a new control frame, and sends the frame to the STA.

In an optional implementation manner, the AP may send the multicast ID of the multicast group to which the STA belongs to the STA in another specific implementation manner: The AP adds a new IE into an existing management frame or an existing control frame or an existing data frame, and encapsulates the multicast ID of the multicast group to which the STA belongs into the new IE and sends the existing management frame or the existing control frame or the existing data frame to the STA.

In an optional implementation manner, after receiving the multicast ID of the multicast group to which the STA belongs from the AP, the STA may send an acknowledge (ACK) message to the AP, so that the AP can know in time whether the STA receives the multicast ID of the multicast group to which the STA belongs successfully. Therefore, after the AP sends the multicast ID of the multicast group to which the STA belongs to the STA, the method includes: receiving, by the AP, the ACK message sent by the STA. Optionally, on condition that the STA is required to send an ACK message, if the AP receives no ACK message in a specified time, the multicast ID of the multicast group to which the STA belongs needs to be sent to the STA again.

In an optional implementation manner, the AP may further initiate a process of deregistering the multicast ID. Therefore, the method in this embodiment may further include: sending, by the AP, a multicast ID deregistration message to the STA, where the multicast ID deregistration message includes a deregistration indication of deregistering the multicast ID of the multicast group to which the STA belongs. Optionally, the multicast ID deregistration message may further include a multicast ID to be deregistered (that is, the multicast ID of the multicast group to which the STA belongs). Correspondingly, the STA receives the multicast ID deregistration message sent by the AP, and therefore knows that the multicast ID of the multicast group to which the STA belongs needs to be deregistered, and therefore, cancels an association relationship with the multicast ID. Optionally, after receiving the multicast ID deregistration message, the STA may send an ACK message to the AP to inform the AP that the multicast ID deregistration message has been received. Correspondingly, after sending the multicast ID deregistration message to the STA, the AP receives the ACK message sent by the STA. On condition that the STA is required to send an ACK message, if the AP receives no ACK message in a specified time, the multicast ID deregistration message needs to be sent again to the corresponding STA that has not received the ACK message.

The AP may send the multicast ID deregistration message to the STA in the following optional implementation manner: The AP uses a new management frame or a new control frame, and encapsulates the multicast ID deregistration message into the new management frame or the new control frame and sends the frame to the STA.

The AP may send the multicast ID deregistration message to the STA in another optional implementation manner: The AP adds a new IE into an existing management frame or control frame or data frame, and encapsulates the multicast ID deregistration message into the new IE and sends the existing management frame or control frame or data frame to the corresponding STA.

In an optional implementation manner, the process of deregistering the multicast ID may also be initiated by the STA proactively. For example, when needing to cancel an association relationship with the multicast group, the STA sends a multicast ID deregistration request to the AP, requesting to cancel the association with the multicast group. Therefore, the method in this embodiment further includes: receiving, by the AP, a multicast ID deregistration request sent by the STA, where the multicast ID deregistration request optionally includes the multicast ID of the multicast group to which the STA belongs, that is, the multicast ID to be deregistered, and then deregistering the multicast ID of the multicast group to which the STA belongs according to the received multicast ID deregistration request. Optionally, after receiving the multicast ID deregistration request, the AP may send an ACK message to the SAT.

The STA may send the multicast ID deregistration request to the AP in the following optional implementation manner: The STA uses a request message, and encapsulates the multicast ID deregistration request into the request message, and sends the request message to the AP. Correspondingly, the AP may receive the multicast ID deregistration request from the STA in the following specific implementation manner: The AP receives the request message sent by the STA, and obtains the multicast ID deregistration request from the request message. The request message here may also be a new message.

The STA may send the multicast ID deregistration request to the AP in another optional implementation manner: The STA adds a new IE into an existing control frame or management frame or data frame, and encapsulates the multicast ID deregistration request into the new IE and sends the existing control frame or management frame or data frame to the AP. Correspondingly, the AP may receive the multicast ID deregistration request from the STA in the following specific implementation manner: The AP receives the existing control frame or management frame or data frame sent by the STA, and obtains the multicast ID deregistration request from the new IE in the control frame or management frame or data frame.

In an optional implementation manner, the AP may further initiate change of the multicast ID. Therefore, the method in this embodiment further includes: sending, by the AP, a multicast ID change message to the STA, where the multicast ID change message includes a changed multicast ID of the multicast group to which the STA belongs. Optionally, the multicast ID change message may further include an original multicast ID of the multicast group to which the STA belongs. For a multicast group, an original multicast ID of the multicast group is a multicast ID to be changed, and a new multicast ID used by the multicast group is the changed multicast ID. The STA receives the multicast ID change message sent by the AP, and therefore knows that the multicast ID needs to be changed, and determines the changed multicast ID. Optionally, after receiving the multicast ID change message sent by the AP, the STA may send an ACK message to the AP. On condition that the STA is required to send an ACK message, if the AP receives no ACK message in a specified time, the multicast ID change message needs to be sent again to the corresponding STA that has not received the ACK message.

The AP may send the multicast ID change message to the STA in the following optional implementation manner: The AP uses a new management frame or a new control frame, and encapsulates the multicast ID change message into the new management frame or the new control frame and sends the frame to the STA.

The AP may send the multicast ID change message to the STA in another optional implementation manner: The AP adds a new IE into an existing management frame or control frame or data frame, and encapsulates the multicast ID change message into the new IE and sends the existing management frame or control frame or data frame to the corresponding STA.

In an optional implementation manner, the change of the multicast ID may also be initiated by the STA proactively. For example, when needing to change the multicast ID, the STA may send a multicast ID change request to the AP, and then receive a multicast ID change message sent according to the multicast ID change request by the AP, where the multicast ID change message includes the changed multicast ID of the multicast group to which the STA belongs. Therefore, the AP may send the multicast ID change message to the STA in the following implementation manner: The AP receives the multicast ID change request sent by the STA, and sends a multicast ID change message to the STA according to the multicast ID change request. The multicast ID change request may include a MAC address or an IP address of the STA, or other information that can uniquely identify the STA. Optionally, the AP may allocate a new multicast ID to the STA according to the information carried in the multicast ID change request, and then send the newly allocated multicast ID as a changed multicast ID to the STA.

The STA may send the multicast ID change request to the AP in the following optional implementation manner: The STA uses a new request message, and encapsulates the multicast ID change request into the new request message, and sends the request message to the AP. Correspondingly, the AP may receive the multicast ID change request from the STA in the following specific implementation manner: The AP receives the new request message sent by the STA, and obtains the multicast ID change request from the new request message.

The STA may send the multicast ID change request to the AP in another optional implementation manner: The STA adds a new IE into an existing control frame or management frame or data frame, and encapsulates the multicast ID change request into the new IE and sends the existing control frame or management frame or data frame to the AP. Correspondingly, the AP may receive the multicast ID change request from the STA in the following specific implementation manner: The AP receives the existing control frame or management frame or data frame sent by the STA, and obtains the multicast ID change request from the new IE in the control frame or management frame or data frame.

The foregoing implementation manners give multiple implementation solutions as regards how the AP sends the multicast ID to the STA, deregisters the multicast ID, and changes the multicast ID, and implement management on the multicast ID, and are simple and easy to implement.

Based on the above implementation manners, optionally, the multicast ID of each multicast group (including the multicast group to which the STA belongs) described above may be a MAC address or an FMS ID, which, however, is not limited thereto.

Based on the above implementation manners, optionally, the multicast ID of each multicast group (including the multicast group to which the STA belongs) described above is at least one association identifier (Association ID, AID for short). The AID here may be an AID other than an AID serving as a unicast AID in an AID space. The AP may determine which AIDs serve as unicast AIDs, and which AIDs serve as multicast IDs. That is to say, it is appropriate as long as the AID serving as the multicast ID is different from those serving as the unicast AID.

Based on that the multicast ID of the multicast group is an AID, before the AP sends the multicast ID of the multicast group to which the STA belongs to the STA, the method may include: mapping, by the AP, the multicast ID of the multicast group to which the STA belongs into an AID; or, mapping, by the AP, the multicast ID of the multicast group to which the STA belongs into at least two AIDs.

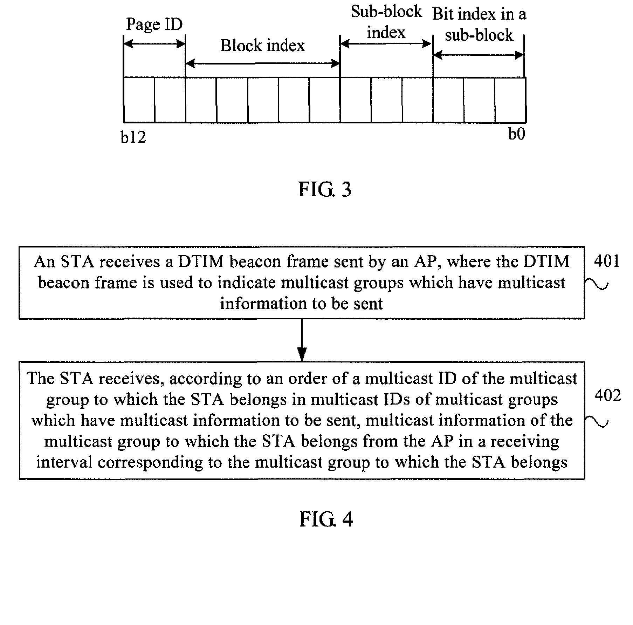

In the prior art, to support more STAs, the AIDs of the STAs are divided into different groups according to a page (English: Page), a block (English: Block), and a sub-block (English: Sub-block). FIG 3 shows a structure of an AID that supports four pages. In an AID structure that supports four pages, one page may include 32 blocks, one block includes 8 sub-blocks, and one sub-block may support 8 STAs. In this way, an AID of such a structure may support up to 8192 STAs. The AID space is enough. In this implementation manner, some of the AIDs are used as multicast IDs. In this way, no additional multicast ID needs to be set, and the beacon frame does not need to be enlarged to carry the set multicast ID, which is conducive to compression of the beacon frame.

Based on the implementation structure of the AID, the AP may map the multicast ID of the multicast group to which the STA belongs into an AID in the following implementation manner: The AP may map the multicast ID of the multicast group to which the STA belongs into any page, block, and/or sub-block in the AID. The multicast IDs of the multiple multicast groups may use the same AID, and the multicast IDs of the multicast groups may be randomly allocated into different pages, blocks, and/or sub-blocks.

Based on the implementation structure of the AID, the AP may map the multicast ID of the multicast group to which the STA belongs into an AID in another implementation manner: The AP maps the multicast ID of the multicast group to which the STA belongs into a pre-specified page, block, and/or sub-block in the AID. Similarly, the multicast IDs of the multiple multicast groups may also use the same AID, and the multicast IDs of the multicast groups may be allocated into the pre-specified page, block, and/or sub-block. In this way, multicast IDs of all multicast groups belong to the same page, block, and/or sub-block, which facilitates management.

Based on the implementation structure of the AID, the AP may map the multicast ID of the multicast group to which the STA belongs into at least two AIDs in the following specific implementation manner: The AP maps the multicast ID of the multicast group to which the STA belongs into different pages, blocks, and/or sub-blocks in the at least two AIDs. The multicast IDs of the multiple multicast groups may use the same at least two AIDs, and the multicast IDs of the multicast groups may be allocated into different pages, blocks, and/or sub-blocks of the at least two AIDs.

Based on the implementation structure of the AID, the AP may map the multicast ID of the multicast group to which the STA belongs into at least two AIDs in another specific implementation manner: The AP maps the multicast ID of the multicast group to which the STA belongs into the same page, block, and/or sub-block in the at least two AIDs. Similarly, the multicast IDs of the multiple multicast groups may use the same at least two AIDs, and the multicast IDs of the multicast groups may be allocated into the same page, block, and/or sub-block of the at least two AIDs.

In conclusion, the AID may be used as the multicast ID of the multicast group in the following manners but without being limited to the following manners:

(1) One AID corresponds to multicast ID(s) of one or more multicast groups, where the multicast ID(s) may be randomly allocated into different pages, blocks, and/or sub-blocks.

(2) One AID corresponds to multicast ID(s) of one or more multicast groups, and all AIDs used to identify the multicast ID of the multicast group use the same page, block, and/or sub-block.

(3) One multicast ID may be identified by multiple AIDs, and the AIDs may use the same or different pages, blocks, and/or sub-blocks.

It should be noted that, in all embodiments of the present invention, the multicast IDs denoted by the AID may be continuous or discontinuous.

In all the above implementation manners, an AID is used as a multicast ID of a multicast group. Compared with the prior art that uses the FMS ID, the AID serving as a multicast ID can be specified by the AP, and the STA does not need to negotiate with the AP, so that the implementation is relatively flexible. In addition, the AID serving as a multicast ID imposes no requirement on a sending cycle of the multicast information, and supports both periodical sending of the multicast information and random sending of the multicast information, and is applicable to more application scenarios. In addition, AID resources serving as multicast IDs are more abundant than the FMS ID, which solves the problem of restricted multicast applications caused by limited number of multicast cycles supported by the FMS ID to some extent.

Therefore, in an optional implementation manner, the DTIM beacon frame may, in the following manner, indicate multicast groups which have multicast information to be sent: using a partial virtual bitmap (English: partial virtual bitmap) in the DTIM beacon frame to indicate the multicast groups which have multicast information to be sent. In the prior art, the partial virtual bitmap is used to, in a unicast circumstance, indicate that a STA corresponding to an AID needs to receive downlink data. In this implementation manner, because the AID is used as a multicast ID, in a multicast circumstance, the partial virtual bitmap existing in the beacon frame may be used to indicate the multicast groups which have multicast information to be sent. For example, if a bit corresponding to an AID in the partial virtual bitmap is 1, it indicates that the multicast group using this AID as a multicast ID has multicast information to be sent; and, if a bit corresponding to multiple AIDs in the partial virtual bitmap is 1, it indicates that the multicast groups using these AIDs as multicast IDs have multicast information to be sent. Therefore, when the AID is used as a multicast ID, bits existing in the beacon frame may be further used to notify the multicast group which have multicast information to be sent, and the beacon frame does not need to be enlarged, which is conducive to compression of the beacon frame.

In conclusion, in the multicast information sending method provided in the embodiment of the present invention, according to the order of the multicast IDs of the multicast groups which have multicast information to be sent, in the sending intervals, the AP sends the multicast information of the multicast groups which have multicast information to be sent; and the STA receives, according to the order of the multicast ID of the multicast group to which the STA belongs in the multicast IDs of the multicast groups which have multicast information to be sent, the multicast information of the multicast group to which the STA belongs in the corresponding receiving interval, thereby solving the problem that each STA receives all multicast information after a beacon frame in the prior art, and reducing STA resource waste caused by the problem.

FIG 4 is a flowchart of a multicast information receiving method according to an embodiment of the present invention. As shown in FIG 4, the method in this embodiment includes the following steps:

Step 401: A STA receives a DTIM beacon frame sent by an AP, where the DTIM beacon frame is used to indicate multicast groups which have multicast information to be sent.

Step 402: The STA receives, according to an order of a multicast ID of a multicast group to which the STA belongs in multicast IDs of multicast groups which have multicast information to be sent, multicast information of the multicast group to which the STA belongs from the AP in a receiving interval corresponding to the multicast group to which the STA belongs.

In this embodiment, each multicast group has a multicast ID used to uniquely identify the multicast group. Multicast information of each multicast group which has multicast information to be sent is stored on the AP. When the AP needs to send multicast information to the STA in at least one multicast group, the AP sends a beacon frame to the STA first, where a type indication bit in the beacon frame indicates that the beacon frame is a DTIM beacon frame. In one aspect, the DTIM beacon frame informs the STA that the multicast information will be sent after the DTIM beacon frame, and in the other aspect, informs the STA which multicast group(s) have multicast information to be sent. Correspondingly, the STA receives the DTIM beacon frame sent by the AP, parses the received beacon frame, knows the multicast groups which have multicast information to be sent, and, according to the multicast ID of the multicast group to which the STA belongs, determines whether the multicast group to which the STA belongs is a multicast group which has multicast information to be sent as indicated by the DTIM beacon frame. If the STA determines that the multicast group to which the STA belongs is a multicast group which has multicast information to be sent as indicated by the DTIM beacon frame, the STA is ready for receiving the multicast information sent by the AP.

After the AP sends the DTIM beacon frame to the STA, according to the order of the multicast ID of the multicast groups which have multicast information to be sent, in each sending interval, the AP sends the multicast information of the multicast groups. For the STA, the processing mode adaptable to the AP is used. That is to say, the STA determines the order of the multicast ID of the multicast group to which the STA belongs among the multicast IDs of the multicast groups which have multicast information to be sent as indicated in the DTIM beacon frame, and then determines the receiving interval corresponding to the multicast group to which the STA belongs according to the order, and then the STA receives the multicast information of the multicast group to which the STA belongs in the corresponding receiving interval, but without receiving multicast information of other multicast groups, thereby solving the problem that the STA needs to receive all multicast information after a DTIM beacon frame after receiving the DTIM beacon frame in the prior art, and reducing STA resource waste caused by the problem, which is especially suitable for the STA that requires low power consumption.

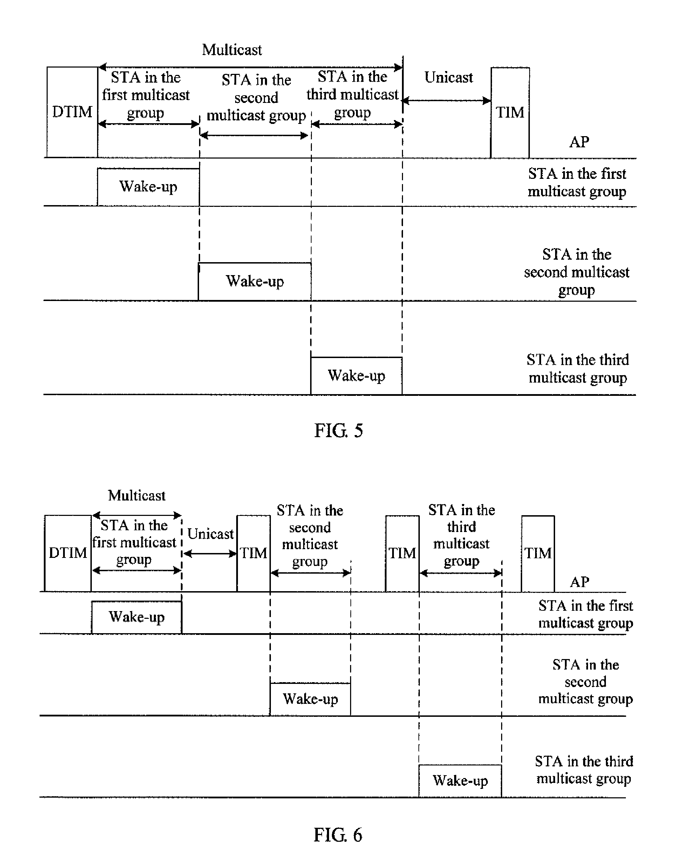

In an optional implementation manner, each receiving interval is average sending duration of the multicast information. Therefore, the STA may receive, according to the order of the multicast ID of the multicast group to which the STA belongs in the multicast IDs of the multicast groups which have multicast information to be sent the multicast information of the multicast group to which the STA belongs from the AP in the receiving interval corresponding to the multicast group to which the STA belongs in the following specific manner: According to the average sending duration of the multicast information and the order of the multicast ID of the multicast group to which the STA belongs in the multicast IDs of the multicast groups which have multicast information to be sent, the STA determines its wake-up time, and then receives the multicast information. As shown in FIG 5, assuming that three multicast groups need to send multicast information, where the three multicast groups are a first multicast group, a second multicast group, and a third multicast group, respectively. Multicast IDs of the three multicast groups are ranked in descending order from the first multicast group to the second multicast group and then to the third multicast group. Therefore, a STA in the three multicast groups receives corresponding multicast information in a manner shown in FIG 5. The STA in the first multicast group wakes up after the DTIM beacon frame and receives its own multicast information (that is, multicast information of the first multicast group), the STA in the second multicast group wakes up after waiting for expiry of average sending duration of one piece of multicast information and receives its own multicast information (that is, multicast information of the second multicast group), and the STA in the third multicast group wakes up after waiting for expiry of average sending duration of two pieces of multicast information and receives its own multicast information (that is, multicast information of the third multicast group). Optionally, every time after the STA waits for average sending duration of one piece of multicast information, the STA may further wait for one SIFS. For example, if the STA waits for average sending duration of two pieces of multicast information, the total waiting duration is (average sending duration of two pieces of multicast information + 2 SIFSs).

Optionally, the average sending duration of the multicast information may be a preset empiric value. In addition, the average sending duration of the multicast information may also be calculated and sent to the STA according to the size of the multicast information to be sent by each multicast group and the sending rate after the AP determines a multicast group which has multicast information to be sent and before the multicast information is sent.

In an optional implementation manner, each receiving interval is a beacon frame interval, where the beacon frame interval refers to an interval between two beacon frames. The beacon frame here includes both a TIM beacon frame and a DTIM beacon frame. According to the order of the multicast ID of the multicast group to which the STA belongs, the STA in each multicast group which has multicast information to be sent may receive its multicast information before a next DTIM beacon frame and after the TIM beacon frame after receiving a current DTIM beacon frame. After the DTIM beacon frame or TIM beacon frame, multicast information of one or more multicast groups may be sent. For example, in FIG. 6, it is assumed that multicast groups which have multicast information to be sent are a first multicast group, a second multicast group, and a third multicast group, respectively, and that multicast IDs of the three multicast groups are ranked in descending order from the first multicast group to the second multicast group and then to the third multicast group. Therefore, a STA in the first multicast group wakes up after the current DTIM beacon frame and receives its own multicast information (that is, multicast information of the first multicast group), a STA in the second multicast group wakes up after a first TIM beacon frame after the current DTIM beacon frame and receives its own multicast information (that is, multicast information of the second multicast group), and a STA in the third multicast group wakes up after a second TIM beacon frame after the current DTIM beacon frame and receives its own multicast information (that is, multicast information of the third multicast group). It should be noted that, the number of TIM beacon frames sent by the AP between two DTIM beacon frames may be determined adaptively.

In an optional implementation manner, the multicast ID may be, but not limited to, a MAC address or an FMS ID.

In an optional implementation manner, the multicast ID is at least one AID. That is to say, the multicast ID of the multicast group which has multicast information to be sent (including the multicast group to which the STA belongs) is at least one AID. The AP may determine which AIDs serve as unicast AIDs, and which AIDs serve as multicast IDs. That is to say, it is appropriate as long as the AID serving as the multicast ID is different from those serving as the unicast AID.

Based on that the multicast ID is an AID, the DTIM beacon frame may, in the following manner, indicate multicast groups which have multicast information to be sent: using a partial virtual bitmap in the DTIM beacon frame to indicate the multicast groups which have multicast information to be sent. For example, if a bit corresponding to an AID in the partial virtual bitmap is 1, it indicates that the multicast group using this AID as a multicast ID has multicast information to be sent; and, if a bit corresponding to multiple AIDs in the partial virtual bitmap is 1, it indicates that the multicast groups using these AIDs as multicast IDs have multicast information to be sent. Therefore, when the AID is used as a multicast ID, bits existing in the beacon frame may be further used to notify the multicast groups which have multicast information to be sent, and the beacon frame does not need to be enlarged, which is conducive to compression of the beacon frame.

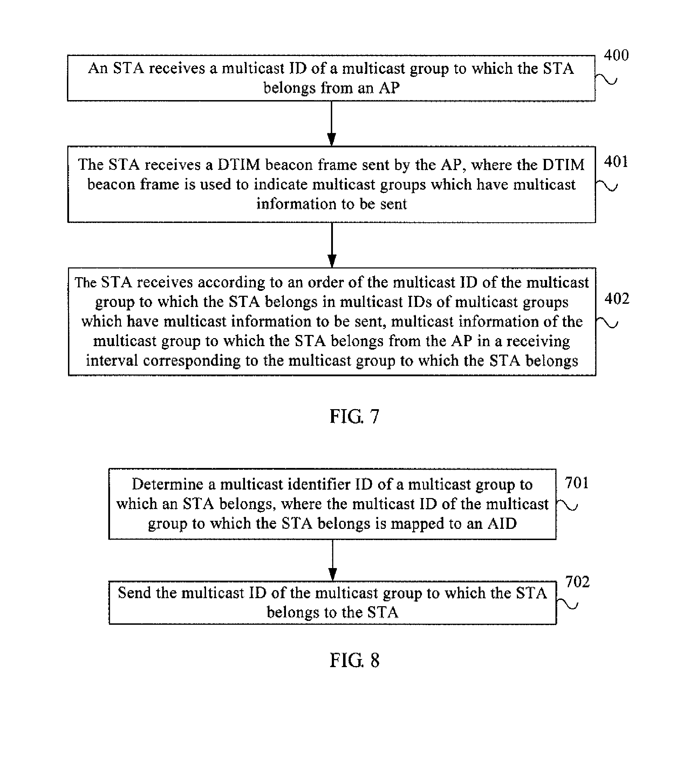

In an optional implementation manner, as shown in FIG 7, before step 401, the method in this embodiment further includes the following steps:

Step 400: The STA receives the multicast ID of the multicast group to which the STA belongs from the AP.

Through step 400, the STA can know the multicast ID of the multicast group to which the STA belongs beforehand, and then receive the multicast information of the multicast group to which the STA belongs in the corresponding receiving interval according to the multicast ID of the multicast group to which the STA belongs.

In an optional implementation manner, the AP may initiate allocation of the multicast ID proactively, that is, the AP sends the multicast ID of the multicast group to which the STA belongs to the STA proactively. Therefore, specifically, the STA may receive the multicast ID of the multicast group to which the STA belongs that is sent by the AP proactively.

In an optional implementation manner, the STA may request the multicast ID of the multicast group to which the STA belongs from the AP proactively, and therefore, the receiving, by the STA, the multicast ID of the multicast group to which the STA belongs from the AP includes: sending, by the STA, information for requesting the multicast ID to the AP, and then, receiving, by the STA, the multicast ID of the multicast group to which the STA belongs, where the multicast ID is sent by the AP according to the information for requesting the multicast ID. The information for requesting the multicast ID sent by the STA may be an MAC address or an IP address of the STA, or other information that can uniquely identify the STA. The AP identifies the STA according to the information for requesting the multicast ID sent by the STA, and then determines the multicast ID of the multicast group to which the STA belongs. Optionally, after receiving the information for requesting the multicast ID, the AP may allocate the multicast ID to the STA in real time, or obtain a pre-allocated multicast ID directly.

The STA may send the information for requesting the multicast ID to the AP in the following optional implementation manner: The STA encapsulates the information for requesting the multicast ID into a request message, and sends the request message to the AP. Optionally, the request message may be a new message.

The STA may send the information for requesting the multicast ID to the AP in another optional implementation manner: The STA adds a new IE into an existing control frame or an existing management frame or an existing data frame, and encapsulates the information for requesting the multicast ID into the new IE and sends the existing control frame or the existing management frame or the existing data frame to the AP.

The STA may receive the multicast ID of the multicast group to which the STA belongs from the AP in the following optional implementation manner: The STA receives a new management frame or a new control frame sent by the AP, where the new management frame or the new control frame includes the multicast ID of the multicast group to which the STA belongs, and therefore, specifically, the STA obtains the multicast ID of the multicast group to which the STA belongs from the received new management frame or new control frame.

The STA may receive the multicast ID of the multicast group to which the STA belongs from the AP in another optional implementation manner: The STA receives an existing management frame or an existing control frame or an existing data frame sent by the AP, where a new IE in the existing management frame or the existing control frame or the existing data frame includes the multicast ID of the multicast group to which the STA belongs, and specifically, the STA obtains the multicast ID of the multicast group to which the STA belongs from the new IE in the received existing management frame or existing control frame or existing data frame.

In an optional implementation manner of this embodiment, after receiving the multicast ID of the multicast group to which the STA belongs from the AP, the STA may send an ACK message to the AP. In this way, the AP can know in time whether the STA receives the multicast ID of the multicast group to which the STA belongs. On condition that the STA is required to send an ACK message, if the AP receives no ACK message in a specified time, the AP needs to send the multicast ID of the multicast group to which the STA belongs to the STA again.

In an optional implementation manner, the AP may further initiate a process of deregistering the multicast ID. For example, the AP sends a multicast ID deregistration message to the STA, where the multicast ID deregistration message carries a deregistration indication of deregistering the multicast ID of the multicast group to which the STA belongs. Therefore, the method in this embodiment further includes: receiving, by the STA, the multicast ID deregistration message sent by the AP, and therefore knowing a need of cancelling association with the multicast group to which the STA belongs, and therefore, cancelling an association relationship with the multicast group. Optionally, after receiving the multicast ID deregistration message, the STA may send an ACK message to the AP to inform the AP that the multicast ID deregistration message has been received. Correspondingly, after sending the multicast ID deregistration message to the STA, the AP receives the ACK message sent by the STA. On condition that the STA is required to send an ACK message, if the AP receives no ACK message in a specified time, the multicast ID deregistration message needs to be sent again to the corresponding STA that has not received the ACK message.

The AP may send the multicast ID deregistration message to the STA in the following optional implementation manner: The AP uses a new management frame or control frame, and encapsulates the multicast ID deregistration message into the new management frame or control frame and sends the frame to the STA. Correspondingly, the STA receives the new management frame or control frame or data frame sent by the AP, and obtains the multicast ID deregistration message from the received new management frame or control frame or data frame.

The AP may send the multicast ID deregistration message to the STA in another optional implementation manner: The AP adds a new IE into an existing management frame or control frame or data frame, and encapsulates the multicast ID deregistration message into the new IE and sends the existing management frame or control frame or data frame to the corresponding STA. Correspondingly, the STA receives the existing management frame or control frame or data frame sent by the AP, and obtains the multicast ID deregistration message from the received existing management frame or control frame or data frame.

In an optional implementation manner, the process of deregistering the multicast ID may also be initiated by the STA proactively. For example, when needing to cancel an association relationship with the multicast group to which the STA belongs, the STA sends a multicast ID deregistration request to the AP, so that the AP deregisters the multicast ID of the multicast group to which the STA belongs according to the multicast ID deregistration request. Correspondingly, the AP receives the multicast ID deregistration request sent by the STA, and optionally, the multicast ID deregistration request may include the multicast ID of the multicast group to which the STA belongs, that is, the multicast ID to be deregistered. Optionally, after receiving the multicast ID deregistration request, the AP may send an ACK message to the SAT. Correspondingly, the STA receives the ACK message sent by the AP, so as to know in time that the AP receives the multicast ID deregistration request and facilitate timely deregistration of the multicast ID. On condition that the AP is required to return an ACK message, if the STA receives no ACK message from the AP in a specified time, the STA needs to send the multicast ID deregistration request to the AP again.

The STA may send the multicast ID deregistration request to the AP in the following optional implementation manner: The STA uses a new request message, and encapsulates the multicast ID deregistration request into the new request message, and sends the request message to the AP.

The STA may send the multicast ID deregistration request to the AP in another optional implementation manner: The STA adds a new IE into an existing control frame or management frame or data frame, and encapsulates the multicast ID deregistration request into the new IE and sends the existing control frame or management frame or data frame to the AP.

In an optional implementation manner, the AP may further initiate change of the multicast ID. For example, the AP sends a multicast ID change message to the STA, where the multicast ID change message includes a changed multicast ID of the multicast group to which the STA belongs. Optionally, the multicast ID change message may further include an original multicast ID of the multicast group to which the STA belongs. For a multicast group, an original multicast ID of the multicast group is a multicast ID to be changed, and a new multicast ID of the multicast group refers to the changed multicast ID. Therefore, the method in this embodiment further includes: receiving, by the STA, the multicast ID change message sent by the AP, and therefore knowing that the multicast ID needs to be changed, and determining the changed multicast ID. Then, the STA updates the multicast ID of the multicast group to which the STA belongs according to the changed multicast ID of the multicast group to which the STA belongs, which is included in the multicast ID change message. Optionally, after receiving the multicast ID change message sent by the AP, the STA may send an ACK message to the AP. On condition that the STA is required to send an ACK message, if the AP receives no ACK message in a specified time, the multicast ID change message needs to be sent again to the corresponding STA that has not received the ACK message.

The AP may send the multicast ID change message to the STA in the following optional implementation manner: The AP uses a new management frame or control frame, and encapsulates the multicast ID change message into the new management frame or control frame and sends the frame to the STA. Correspondingly, the STA receives the new management frame or control frame sent by the AP, and obtains the multicast ID change message from the received new management frame or control frame.

The AP may send the multicast ID change message to the STA in another optional implementation manner: The AP adds a new IE into an existing management frame or control frame or data frame, and encapsulates the multicast ID change message into the new IE and sends the existing management frame or control frame or data frame to the corresponding STA. Correspondingly, the STA receives the existing management frame or control frame or data frame sent by the AP, and obtains the multicast ID change message from the new IE in the received existing management frame or control frame or data frame.

In an optional implementation manner, the change of the multicast ID may also be initiated by the STA proactively. Therefore, the method in this embodiment further includes: when needing to change the multicast ID, sending, by the STA, a multicast ID change request to the AP, and then receiving a multicast ID change message sent according to the multicast ID change request by the AP. Correspondingly, the AP receives the multicast ID change request sent by the STA, and sends a changed multicast ID to the STA according to the multicast ID change request. The multicast ID change request may include a MAC address or an IP address of the STA, or other information that can uniquely identify the STA. Optionally, the AP may allocate a new multicast ID to the STA according to the information carried in the multicast ID change request, and then send the newly allocated multicast ID as a changed multicast ID to the STA.

The STA may send the multicast ID change request to the AP in the following optional implementation manner: The STA uses a request message, and encapsulates the multicast ID change request into the request message, and sends the request message to the AP. The request message here may also be a new message.

The STA may send the multicast ID change request to the AP in another optional implementation manner: The STA adds a new IE into an existing control frame or management frame or data frame, and encapsulates the multicast ID change request into the new IE and sends the existing control frame or management frame or data frame to the AP.

The foregoing implementation manners give multiple implementation solutions as regards how the STA receives the multicast ID of the multicast group to which the STA belongs, deregisters the multicast ID, and changes the multicast ID, and implement management on the multicast ID, and are simple and easy to implement.

As can be seen from above, in the multicast information receiving method provided in the embodiment of the present invention, the STA receives the DTIM beacon frame sent by the AP, and, according to the DTIM beacon frame, knows the multicast groups which have multicast information to be sent, and then the STA receives, according to the order of the multicast ID of the multicast group to which the STA belongs in multicast IDs of all multicast groups which have multicast information to be sent, the multicast information of the multicast group to which the STA belongs in the corresponding receiving interval, thereby solving the problem that each STA receives all multicast information after a beacon frame in the prior art, and reducing STA resource waste caused by the problem.

Further, in the multicast information receiving method provided in this embodiment, an AID is used as a multicast ID. Compared with the prior art that uses the FMS ID, the AID serving as a multicast ID can be specified by the AP, and the STA does not need to negotiate with the AP, so that the implementation is relatively flexible. In addition, the AID serving as a multicast ID imposes no requirement on a sending cycle of the multicast information, and supports both periodical sending of the multicast information and random sending of the multicast information, and is applicable to more application scenarios. In addition, AID resources serving as multicast IDs are more abundant than the FMS ID, which solves the problem of restricted multicast applications caused by limited number of multicast cycles supported by the FMS ID to some extent.

An FMS mode is put forward in the prior art. A STA working in the FMS mode can negotiate with an AP about a cycle of listening to a DTIM beacon frame, so that it is not necessary to listen to each DTIM beacon frame. However, the FMS mode supports at most 8 different cycles, which are identified by an 8-bit FMS ID, which restricts flexibility in the practical application. To cope with such the problem, the following embodiment of the present invention provides a multicast identifier sending method and a multicast identifier receiving method to solve the problem that a multicast application is restricted by limited number of multicast cycles supported by the FSM ID in the prior art.

FIG 8 is a flowchart of a multicast identifier sending method according to an embodiment of the present invention. The entity for implementing this embodiment is an AP. As shown in FIG 8, the method in this embodiment includes the following steps:

Step 701: Determine a multicast identifier ID of a multicast group to which a STA belongs, where the multicast ID of the multicast group to which the STA belongs is mapped to an AID.

Step 702: Send the multicast ID of the multicast group to which the STA belongs to the STA.

The AP may determine the multicast ID of the multicast group to which the station STA belongs in the following optional implementation manner: The AP maps the multicast ID of the multicast group to which the STA belongs to an AID.

The AP may determine the multicast ID of the multicast group to which the station STA belongs in another optional implementation manner: The AP maps the multicast ID of the multicast group to which the STA belongs to at least two AIDs.

Therefore, the AP may map the multicast ID of the multicast group to which the STA belongs to an AID in the following optional implementation manners but without being limited to the following manners:

The AP maps the multicast ID of the multicast group to which the STA belongs into any page, block, and/or sub-block in the AID.

The AP maps the multicast ID of the multicast group to which the STA belongs into a pre-specified page, block, and/or sub-block in the AID.

Therefore, the AP may map the multicast ID of the multicast group to which the STA belongs to at least two AIDs in the following optional implementation manners but without being limited to the following manners:

The AP maps the multicast ID of the multicast group to which the STA belongs into different pages, blocks, and/or sub-blocks in the at least two AIDs.

The AP maps the multicast ID of the multicast group to which the STA belongs into the same page, block, and/or sub-block in the at least two AIDs.

In an optional implementation manner, the AP may initiate allocation of the multicast ID proactively, and therefore, the AP may send the multicast ID of the multicast group to which the STA belongs to the corresponding STA proactively.

In an optional implementation manner, the STA may request the multicast ID of the multicast group to which the STA belongs from the AP proactively, and therefore, the AP may send the multicast ID of the multicast group to which the STA belongs to the STA in the following implementation manner: receiving information for requesting the multicast ID sent by the STA, and then sending the multicast ID of the multicast group to which the STA belongs to the STA according to the information for requesting the multicast ID.

The AP may, in the following implementation manner, receive the information for requesting the multicast ID sent by the STA: The AP receives a request message sent by the STA, where the request message includes the information for requesting the multicast ID. Optionally, the request message may be a new message.

The AP may, in another implementation manner, receive the information for requesting the multicast ID sent by the STA: The AP receives an existing control frame or an existing management frame or an existing data frame sent by the STA, where a new IE in the existing control frame or the existing management frame or the existing data frame includes the information for requesting the multicast ID.

In an optional implementation manner, the AP may send the multicast ID of the multicast group to which the STA belongs to the STA in the following implementation manner: The AP encapsulates the multicast ID of the multicast group to which the STA belongs into a new management frame or a new control frame, and sends the frame to the STA.

In an optional implementation manner, the AP may send the multicast ID of the multicast group to which the STA belongs to the STA in another implementation manner: The AP adds a new IE into an existing management frame or an existing control frame or an existing data frame, and encapsulates the multicast ID of the multicast group to which the STA belongs into the new IE and sends the existing management frame or existing control frame or existing data frame to the STA.

In an optional implementation manner, after the AP sends the multicast ID of the multicast group to which the STA belongs to the STA, the method further includes: receiving, by the AP, an ACK message sent by the STA. In this way, the AP can conveniently know in time whether the STA receives the multicast ID of the multicast group to which the STA belongs. On condition that the STA is required to return an ACK message, if the AP receives no ACK message in a specified time, the AP needs to send the multicast ID of the multicast group to which the STA belongs to the STA again.

In an optional implementation manner, the AP may further initiate a process of deregistering the multicast ID. Therefore, the method in this embodiment may further include: sending, by the AP, a multicast ID deregistration message to the STA, where the multicast ID deregistration message includes a deregistration indication of deregistering the multicast ID of the multicast group to which the STA belongs. Optionally, the multicast ID deregistration message may further include a multicast ID to be deregistered, that is, the multicast ID of the multicast group to which the STA belongs.

The AP may send the multicast ID deregistration message to the STA in the following optional implementation manner: The AP uses a new management frame or control frame, and encapsulates the multicast ID deregistration message into the new management frame or control frame and sends the frame to the STA.

The AP may send the multicast ID deregistration message to the STA in another optional implementation manner: The AP adds a new IE into an existing management frame or control frame or data frame, and encapsulates the multicast ID deregistration message into the new IE and sends the existing management frame or control frame or data frame to the corresponding STA.

In an optional implementation manner, after the AP sends the multicast ID of the multicast group to which the STA belongs to the STA, the method may further include: receiving, by the AP, a multicast ID deregistration request sent by the STA, and deregistering the multicast ID of the multicast group to which the STA belongs according to the multicast ID deregistration request.

In an optional implementation manner, the AP may further initiate change of the multicast ID. Therefore, the method in this embodiment further includes: sending, by the AP, a multicast ID change message to the STA, where the multicast ID change message includes a changed multicast ID of the multicast group to which the STA belongs. Optionally, the multicast ID change message may further include a multicast ID to be changed, that is, an original multicast ID of the multicast group to which the STA belongs. For a multicast group, the multicast ID to be changed here is the original multicast ID of the multicast group, and the changed multicast ID is a new multicast ID used by the multicast group.

Optionally, the AP may send the multicast ID change message to the STA in the following implementation manner: The AP receives the multicast ID change request sent by the STA, and sends a multicast ID change message to the STA according to the multicast ID change request.

The AP may send the multicast ID change message to the STA in the following optional implementation manner: The AP uses a new management frame or control frame, and encapsulates the multicast ID change message into the new management frame or control frame and sends the frame to the STA.

The AP may send the multicast ID change message to the STA in another optional implementation manner: The AP adds a new IE into an existing management frame or control frame or data frame, and encapsulates the multicast ID change message into the new IE and sends the existing management frame or control frame or data frame to the corresponding STA.

For details of the foregoing implementation manners, reference may be made to the description about the embodiment of the multicast information sending method described above, and no repeated description is given here any further.

As can be seen from above, in the multicast identifier sending method provided in this embodiment, an AID is used as a multicast ID of a multicast group, and the AP sends the multicast ID of the multicast group to which the STA belongs to the STA, so that the STA can obtain the multicast ID of the multicast group to which the STA belongs. By virtue of abundance of AID resources, the problem of restricted multicast applications caused by limited number of multicast cycles supported by an FSM ID in the prior art is solved to some extent. In addition, the AID is used as the multicast ID of the multicast group in this embodiment. Compared with the prior art that uses the FMS ID, the AID serving as a multicast ID can be specified by the AP, and the STA does not need to negotiate with the AP, so that the implementation is relatively flexible. In addition, the AID serving as a multicast ID imposes no requirement on a sending cycle of the multicast information, and supports both periodical sending of the multicast information and random sending of the multicast information, and is applicable to more application scenarios.

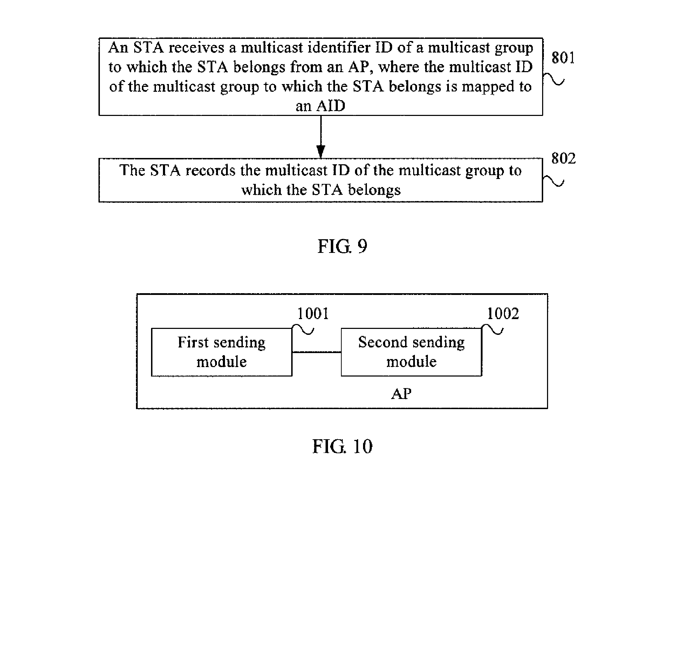

FIG 9 is a flowchart of a multicast identifier receiving method according to an embodiment of the present invention. As shown in FIG. 9, the method in this embodiment includes the following steps:

Step 801: A STA receives a multicast identifier ID of a multicast group to which the STA belongs from an AP, where the multicast ID of the multicast group to which the STA belongs is mapped to an AID.

Step 802: The STA records the multicast ID of the multicast group to which the STA belongs.

In an optional implementation manner, the AP may initiate allocation of the multicast ID, and therefore, the STA may receive the multicast identifier ID of the multicast group to which the STA belongs from the AP in the following specific manner: The STA receives the multicast identifier ID of the multicast group to which the STA belongs, where the multicast ID is sent by the AP proactively.

In an optional implementation manner, the STA may initiate allocation of the multicast ID, and therefore, the STA may receive the multicast identifier ID of the multicast group to which the STA belongs from the AP in the following specific manner: The STA sends information for requesting the multicast ID to the AP, and then receives the multicast ID of the multicast group to which the STA belongs, where the multicast ID is sent by the AP according to the information for requesting the multicast ID.

The STA may send the information for requesting the multicast ID to the AP in the following optional implementation manner: The STA encapsulates the information for requesting the multicast ID into a request message, and sends the request message to the AP. Optionally, the request message may be a new message.

The STA may send the information for requesting the multicast ID to the AP in another optional implementation manner: The STA adds a new IE into an existing control frame or an existing management frame or an existing data frame, and encapsulates the information for requesting the multicast ID into the new IE and sends the existing control frame or an existing management frame or an existing data frame to the AP.

The STA may receive the multicast identifier ID of the multicast group to which the STA belongs from the AP in the following implementation manner: The STA receives a new management frame or a new control frame sent by the AP, where the new management frame or the new control frame includes the multicast ID of the multicast group to which the STA belongs.

The STA may receive the multicast identifier ID of the multicast group to which the STA belongs from the AP in another implementation manner: The STA receives an existing management frame or an existing control frame or an existing data frame sent by the AP, where a new IE in the existing management frame or the existing control frame or the existing data frame includes the multicast ID of the multicast group to which the STA belongs.

In an optional implementation manner, after the STA receives the multicast identifier ID of the multicast group to which the STA belongs from the AP, the method includes: sending, by the STA, an ACK message to the AP.

In an optional implementation manner, the AP may further initiate a process of deregistering the multicast ID. Therefore, the method in this embodiment further includes: receiving, by the STA, a multicast ID deregistration message sent by the AP, where the multicast ID deregistration message includes a deregistration indication of deregistering the multicast ID of the multicast group to which the STA belongs. Optionally, after receiving the multicast ID deregistration message, the STA may send an ACK message to the AP to inform the AP that the multicast ID deregistration message has been received.

The AP may send the multicast ID deregistration message to the STA in the following optional implementation manner: The AP uses a new management frame or control frame, and encapsulates the multicast ID deregistration message into the new management frame or control frame and sends the frame to the STA. Correspondingly, the STA receives the new management frame or control frame sent by the AP, and obtains the multicast ID deregistration message from the received new management frame or control frame.

In an optional implementation manner, the process of deregistering the multicast ID may also be initiated by the STA proactively. Therefore, the method in this embodiment further includes: when needing to cancel an association relationship with the multicast group to which the STA belongs, sending, by the STA, a multicast ID deregistration request to the AP, so that the AP deregisters the multicast ID of the multicast group to which the STA belongs according to the multicast ID deregistration request, thereby cancelling the association with the multicast group.

The STA may send the multicast ID deregistration request to the AP in the following optional implementation manner: The STA uses a new request message, and encapsulates the multicast ID deregistration request into the new request message, and sends the request message to the AP.

The STA may send the multicast ID deregistration request to the AP in another optional implementation manner: The STA adds a new IE into an existing control frame or management frame or data frame, and encapsulates the multicast ID deregistration request into the new IE and sends the existing control frame or management frame or data frame to the AP.

In an optional implementation manner, the AP may further initiate change of the multicast ID. Therefore, the method in this embodiment further includes: receiving, by the STA, a multicast ID change message sent by the AP, where the multicast ID change message includes a changed multicast ID of the multicast group to which the STA belongs. According to the multicast ID change message, the STA knows a need of changing the multicast ID and determines the changed multicast ID, and then updates the multicast ID of the multicast group to which the STA belongs according to the changed multicast ID of the multicast group to which the STA belongs, which is included in the multicast ID change message.

In an optional implementation manner, the change of the multicast ID may also be initiated by the STA pro actively. Therefore, the STA may receive the multicast ID change message from the AP in the following implementation manner: When needing to change the multicast ID, the STA may send a multicast ID change request to the AP, and then receive a multicast ID change message sent according to the multicast ID change request by the AP.

The STA may send the multicast ID change request to the AP in the following optional implementation manner: The STA uses a request message, and encapsulates the multicast ID change request into the request message, and sends the request message to the AP. The request message here may also be a new message.

The STA may send the multicast ID change request to the AP in another optional implementation manner: The STA adds a new IE into an existing control frame or management frame or data frame, and encapsulates the multicast ID change request into the new IE and sends the existing control frame or management frame or data frame to the AP.

The foregoing implementation manners give multiple implementation solutions as regards how the STA receives the multicast ID of the multicast group to which the STA belongs, deregisters the multicast ID, and changes the multicast ID, and implement management on the multicast ID, and are simple and easy to implement.

For details of the foregoing implementation manners, reference may be made to the description about the embodiment of the multicast information sending method described above, and no repeated description is given here any further.

As can be seen from above, in the multicast identifier receiving method provided in this embodiment, an AID is used as a multicast ID of a multicast group, and the STA receives the multicast ID of the multicast group to which the STA belongs from the AP, and then makes use of abundance of AID resources, so that the problem of restricted multicast applications caused by limited number of multicast cycles supported by an FSM ID in the prior art is solved to some extent. In addition, the AID is used as the multicast ID of the multicast group in this embodiment. Compared with the prior art that uses the FMS ID, the AID serving as a multicast ID can be specified by the AP, and the STA does not need to negotiate with the AP, so that the implementation is relatively flexible. In addition, the AID serving as a multicast ID imposes no requirement on a sending cycle of the multicast information, and supports both periodical sending of the multicast information and random sending of the multicast information, and is applicable to more application scenarios.

FIG 10 is a schematic structural diagram of an AP according to an embodiment of the present invention. As shown in FIG. 10, the AP in this embodiment includes: a first sending module 1001 and a second sending module 1002.

The first sending module 1001 is configured to send a DTIM beacon frame to a STA, where the DTIM beacon frame is used to indicate multicast groups which have multicast information to be sent. The first sending module 1001 is connected to the second sending module 1002 and is configured to provide the second sending module 1002 with information about multicast groups that have multicast information to be sent.

The second sending module 1002 is configured to: according to an order of multicast identifier IDs of the multicast groups which have multicast information to be sent, in preset sending intervals, send multicast information of the multicast groups which have multicast information to be sent, so that the STA receives multicast information of a multicast group to which the STA belongs in a receiving interval corresponding to the multicast group to which the STA belongs.

Function modules of the AP provided in this embodiment may be configured to implement the procedure of the multicast information sending method shown in FIG. 1. Detailed working principles of the modules are not given here any further and reference may be made to the descriptions in the method embodiment.

The AP in this embodiment sends a DTIM beacon frame to the STA, where the DTIM beacon frame indicates the multicast groups which have multicast information to be sent. Then, according to the order of the multicast IDs of the multicast groups which have multicast information to be sent, in each sending interval, the AP sends the multicast information of the multicast groups. Therefore, according to the multicast ID of the multicast group to which the STA belongs, the STA can receive the multicast information of the multicast group to which the STA belongs in the corresponding receiving interval, but without receiving multicast information of other multicast groups, thereby solving the problem that the STA needs to receive all multicast information after a beacon frame after receiving the beacon frame in the prior art, and reducing STA resource waste caused by the problem, which is especially suitable for a STA that requires low power consumption.

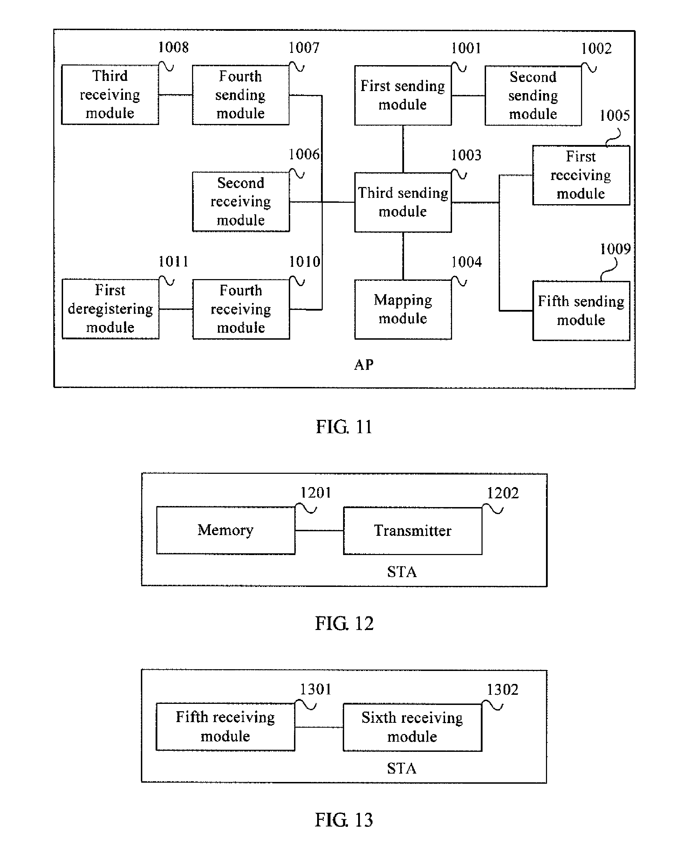

FIG 11 is a schematic structural diagram of an AP according to another embodiment of the present invention. This embodiment is implemented based on the embodiment shown in FIG 10. As shown in FIG. 11, the AP in this embodiment also includes a first sending module 1001 and a second sending module 1002, and additionally, the AP in this embodiment further includes a third sending module 1003.

The third sending module 1003 is configured to send the multicast ID of the multicast group to which the STA belongs to the STA before the first sending module 1001 sends the DTIM beacon frame to the STA. Optionally, the third sending module 1003 is connected to the first sending module 1001.

In an optional implementation manner, the AP in this embodiment further includes a mapping module 1004. The mapping module 1004 is connected to the third sending module 1003, and is configured to map the multicast ID of the multicast group to which the STA belongs to an AID before the third sending module 1003 sends the multicast ID of the multicast group to which the STA belongs to the STA.

The mapping module 1004 may be configured to map the multicast ID of the multicast group to which the STA belongs to an AID. For example, the mapping module 1004 is specifically configured to map the multicast ID of the multicast group to which the STA belongs into any page, block, and/or sub-block in the AID; or the mapping module 1004 is specifically configured to map the multicast ID of the multicast group to which the STA belongs into a pre-specified page, block, and/or sub-block in the AID.

The mapping module 1004 may be further configured to map the multicast ID of the multicast group to which the STA belongs to at least two AIDs. For example, the mapping module 1004 is specifically configured to map the multicast ID of the multicast group to which the STA belongs into different pages, blocks, and/or sub-blocks in at least two AIDs; or the mapping module 1004 is specifically configured to map the multicast ID of the multicast group to which the STA belongs into the same page, block, and/or sub-block in at least two AIDs.

Based on that the multicast ID is an AID, the DTIM beacon frame may, in the following manner, indicate multicast groups which have multicast information to be sent: using a partial virtual bitmap in the DTIM beacon frame to indicate the multicast groups which have multicast information to be sent.

In an optional implementation manner, the third sending module 1003 is specifically configured to encapsulate the multicast ID of the multicast group to which the STA belongs into a management frame or a control frame, and send the frame to the STA; or
the third sending module 1003 is specifically configured to add a new IE into an existing management frame or an existing control frame or an existing data frame, and encapsulate the multicast ID of the multicast group to which the STA belongs into the new IE and send the existing management frame or existing control frame or existing data frame to the STA.

In an optional implementation manner, the AP in this embodiment further includes a first receiving module 1005. The first receiving module 1005 is configured to receive information for requesting the multicast ID sent by the STA. Therefore, the third sending module 1003 is specifically configured to send the multicast ID of the multicast group to which the STA belongs to the STA according to the information for requesting the multicast ID received by the first receiving module 1005. Optionally, the first receiving module 1005 is connected to the third sending module 1003, and is configured to provide the third sending module 1003 with the information for requesting the multicast ID.

The first receiving module 1005 is specifically configured to receive a request message sent by the STA, where the request message includes the information for requesting the multicast ID; or
the first receiving module 1005 is specifically configured to receive the existing control frame or the existing management frame or the existing data frame sent by the STA, where the new IE in the existing control frame or the existing management frame or the existing data frame includes the information for requesting the multicast ID.

In an optional implementation manner, the AP in this embodiment further includes a second receiving module 1006. The second receiving module 1006 is configured to receive an acknowledge message sent by the STA. Optionally, the second receiving module 1006 is connected to the third sending module 1003, and is configured to receive the acknowledge message from the STA after the third sending module 1003 sends the multicast ID of the multicast group to which the STA belongs to the STA.

In an optional implementation manner, the AP in this embodiment further includes a fourth sending module 1007. The fourth sending module 1007 is configured to: after the third sending module 1003 sends the multicast ID of the multicast group to which the STA belongs to the STA, send a multicast ID change message to the STA, where the multicast ID change message includes a changed multicast ID of the multicast group to which the STA belongs. The fourth sending module 1007 is connected to the third sending module 1003.

In an optional implementation manner, the AP in this embodiment further includes a third receiving module 1008. The third receiving module 1008 is configured to receive the multicast ID change request sent by the STA. Therefore, the fourth sending module 1007 is specifically configured to send the multicast ID change message to the STA according to the multicast ID change request received by the third receiving module 1008. Optionally, the fourth sending module 1007 is connected to the third receiving module 1008.

In an optional implementation manner, the AP in this embodiment further includes a fifth sending module 1009. The fifth sending module 1009 is configured to: after the third sending module 1003 sends the multicast ID of the multicast group to which the STA belongs to the STA, send a multicast ID deregistration message to the STA, where the multicast ID deregistration message includes a deregistration indication of deregistering the multicast ID of the multicast group to which the STA belongs. Optionally, the fifth sending module 1009 is connected to the third sending module 1003.

In an optional implementation manner, the AP in this embodiment further includes a fourth receiving module 1010 and a first deregistering module 1011.

The fourth receiving module 1010 is configured to receive the multicast ID deregistration request from the STA after the third sending module 1003 sends the multicast ID of the multicast group to which the STA belongs to the STA. Optionally, the fourth receiving module 1010 is connected to the third sending module 1003.

The first deregistering module 1011 is connected to the fourth receiving module 1010 and is configured to deregister the multicast ID of the multicast group to which the STA belongs according to the multicast ID deregistration request received by the fourth receiving module 1010.

Function modules of the AP provided in this embodiment may be configured to implement the corresponding procedure of the multicast information sending method provided in the preceding embodiment. Detailed working principles of the modules are not given here any further and reference may be made to the descriptions in the method embodiment.

The AP in this embodiment sends a DTIM beacon frame to the STA, where the DTIM beacon frame indicates the multicast groups which have multicast information to be sent. Then, according to the order of the multicast IDs of the multicast groups which have multicast information to be sent, in each sending interval, the AP sends the multicast information of the multicast groups. Therefore, according to the multicast ID of the multicast group to which the STA belongs, the STA can receive the multicast information of the multicast group to which the STA belongs in the corresponding receiving interval, but without receiving multicast information of other multicast groups, thereby solving the problem that the STA needs to receive all multicast information after a beacon frame after receiving the beacon frame in the prior art, and reducing STA resource waste caused by the problem.

FIG 12 is a schematic structural diagram of an AP according to still another embodiment of the present invention. As shown in FIG 12, the AP in this embodiment includes a memory 1201 and a transmitter 1202.

The memory 1201 is configured to store multicast information of multicast groups which have multicast information to be sent.

The transmitter 1202 is connected to the memory 1201 and is configured to send a DTIM beacon frame to a STA, and, according to an order of a multicast identifier IDs of the multicast groups which have multicast information to be sent, in preset sending intervals, send the multicast information of the multicast groups which have multicast information to be sent, where the multicast information is stored in the memory 1201, so that the STA receives multicast information of a multicast group to which the STA belongs in a receiving interval corresponding to the multicast group to which the STA belongs, where the DTIM beacon frame is used to indicate the multicast groups which have multicast information to be sent.

The AP provided in this embodiment may be configured to implement the corresponding procedure of the multicast information sending method provided in the preceding embodiment. Detailed working principles of the AP are not given here any further and reference may be made to the descriptions in the method embodiment.

The AP in this embodiment sends a DTIM beacon frame to the STA, where the DTIM beacon frame indicates the multicast groups which have multicast information to be sent. Then, according to the order of the multicast IDs of the multicast groups which have multicast information to be sent, in each sending interval, the AP sends the multicast information of the multicast groups. Therefore, according to the multicast ID of the multicast group to which the STA belongs, the STA can receive the multicast information of the multicast group to which the STA belongs in the corresponding receiving interval, but without receiving multicast information of other multicast groups, thereby solving the problem that the STA needs to receive all multicast information after a beacon frame after receiving the beacon frame in the prior art, and reducing STA resource waste caused by the problem.

FIG 13 is a schematic structural diagram of a STA according to an embodiment of the present invention. As shown in FIG 13, the STA in this embodiment includes a fifth receiving module 1301 and a sixth receiving module 1302.

The fifth receiving module 1301 is configured to receive a DTIM beacon frame sent by an AP, where the DTIM beacon frame is used to indicate multicast groups which have multicast information to be sent.

The sixth receiving module 1302 is connected to the fifth receiving module 1301 and is configured to: according to an order of a multicast identifier ID of a multicast group to which the STA belongs in this embodiment among multicast identifiers IDs of multicast groups which have multicast information to be sent as indicated by the DTIM beacon frame received by the fifth receiving module 1301, receive multicast information of the multicast group to which the STA belongs in this embodiment from the AP in a receiving interval corresponding to the multicast group to which the STA belongs in this embodiment.

In an optional implementation manner, each receiving interval is average sending duration of the multicast information or a beacon frame interval.

In an optional implementation manner, a multicast ID of each multicast group which have multicast information to be sent is an AID.

Based on that the multicast ID is an AID, the DTIM beacon frame may, in the following manner, indicate the multicast groups which have multicast information to be sent: using a partial virtual bitmap in the DTIM beacon frame to indicate the multicast groups which have multicast information to be sent.

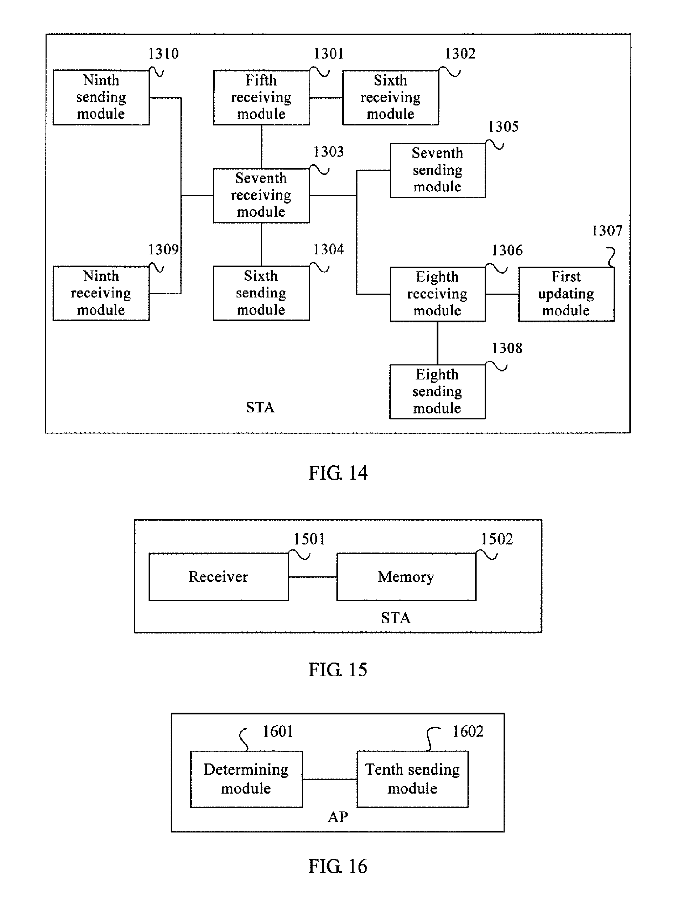

In an optional implementation manner, as shown in FIG 14, the STA in this embodiment further includes a seventh receiving module 1303. The seventh receiving module 1303 is configured to receive the multicast ID of the multicast group to which the STA belongs in this embodiment from the AP before the fifth receiving module 1301 receives the DTIM beacon frame.

Optionally, the seventh receiving module 1303 is specifically configured to receive a management frame or a control frame sent by the AP, where the management frame or the control frame includes the multicast ID of the multicast group to which the STA belongs in this embodiment, where the management frame or control frame may be newly added; or
the seventh receiving module 1303 is specifically configured to receive an existing management frame or an existing control frame or an existing data frame sent by the AP, where a new IE in the existing management frame or the existing control frame or the existing data frame includes the multicast ID of the multicast group to which the STA belongs in this embodiment.

In an optional implementation manner, as shown in FIG. 14, the STA in this embodiment further includes a sixth sending module 1304. The sixth sending module 1304 is configured to send information for requesting the multicast ID to the AP. Therefore, the seventh receiving module 1303 is specifically configured to receive the multicast ID of the multicast group to which the STA belongs in this embodiment, where the multicast ID is sent by the AP according to the information for requesting the multicast ID sent by the sixth sending module 1304. Optionally, the seventh receiving module 1303 is connected to the sixth sending module 1304, and is configured to receive the multicast ID of the multicast group to which the STA belongs in this embodiment from the AP after the sixth sending module 1304 sends the information for requesting the multicast ID.

Optionally, the sixth sending module 1304 is specifically configured to encapsulate the information for requesting the multicast ID into a request message, and sends the request message to the AP; or
the sixth sending module 1304 is specifically configured to add a new IE into an existing control frame or an existing management frame or an existing data frame, and encapsulate the information for requesting the multicast ID into the new IE and send the existing control frame or existing management frame or existing data frame to the AP.

In an optional implementation manner, as shown in FIG. 14, the STA in this embodiment further includes a seventh sending module 1305. The seventh sending module 1305 is configured to send an acknowledge message to the AP after the seventh receiving module 1303 receives the multicast ID of the multicast group to which the STA belongs in this embodiment. Optionally, the seventh sending module 1305 is connected to the seventh receiving module 1303.

In an optional implementation manner, as shown in FIG 14, the STA in this embodiment further includes an eighth receiving module 1306 and a first updating module 1307.

The eighth receiving module 1306 is configured to: after the seventh receiving module 1303 receives the multicast ID of the multicast group to which the STA belongs in this embodiment from the AP, receive a multicast ID change message sent by the AP, where the multicast ID change message includes a changed multicast ID of the multicast group to which the STA belongs in this embodiment. Optionally, the eighth receiving module 1306 is connected to the seventh receiving module 1303.

The first updating module 1307 is connected to the eighth receiving module 1306, and is configured to update the multicast ID of the multicast group to which the STA belongs in this embodiment according to the changed multicast ID of the multicast group to which the STA belongs in this embodiment, which is included in the multicast ID change message received by the eighth receiving module 1306.

In an optional implementation manner, as shown in FIG 14, the STA in this embodiment further includes an eighth sending module 1308. The eighth sending module 1308 is configured to send a multicast ID change request to the AP. Therefore, the eighth receiving module 1306 is specifically configured to receive the multicast ID change message sent according to the multicast ID change request by the AP. Optionally, the eighth receiving module 1306 is connected to the eighth sending module 1308, and is configured to receive the multicast ID change message from the AP after the eighth sending module 1308 sends the multicast ID change request.

In an optional implementation manner, as shown in FIG 14, the STA in this embodiment further includes a ninth receiving module 1309. The ninth receiving module 1309 is configured to: after the seventh receiving module 1303 receives the multicast ID of the multicast group to which the STA belongs in this embodiment from the AP, receive a multicast ID deregistration message sent by the AP, where the multicast ID deregistration message includes a deregistration indication of deregistering the multicast ID of the multicast group to which the STA belongs in this embodiment. Optionally, the ninth receiving module 1309 is connected to the seventh receiving module 1303.

In an optional implementation manner, as shown in FIG 14, the STA in this embodiment further includes a ninth sending module 1310. The ninth sending module 1310 is configured to: after the seventh receiving module 1303 receives the multicast ID of the multicast group to which the STA belongs in this embodiment from the AP, send a multicast ID deregistration request to the AP, so that the AP deregisters the multicast ID of the multicast group to which the STA belongs in this embodiment according to the multicast ID deregistration request. Optionally, the ninth sending module 1310 is connected to the seventh receiving module 1303.

Function modules of the STA provided in this embodiment may be configured to implement the corresponding procedure of the multicast information receiving method provided in the preceding embodiment. Detailed working principles of the modules are not given here and reference may be made to the descriptions in the method embodiment.

The STA in this embodiment collaborates with the AP provided in the preceding embodiment, and receives the DTIM beacon frame sent by the AP, and, as indicated by the DTIM beacon frame, knows the multicast groups which have multicast information to be sent, and then the STA receives, according to the order of the multicast ID of the multicast group to which the STA belongs in the multicast IDs of the multicast groups which have multicast information to be sent, its own multicast information from the AP in the receiving interval corresponding to the multicast group to which the STA belongs, without receiving the multicast information of other multicast groups, thereby solving the problem that the STA needs to receive all multicast information after a beacon frame after receiving the beacon frame in the prior art, and reducing STA resource waste caused by the problem.

FIG 15 is a schematic structural diagram of a STA according to still another embodiment of the present invention. As shown in FIG 15, the STA in this embodiment includes a receiver 1501 and a memory 1502.

The receiver 1501 is configured to receive a DTIM beacon frame sent by an AP, and, according to an order of a multicast identifier ID of a multicast group to which the STA belongs in this embodiment in multicast IDs of multicast groups which have multicast information to be sent, receive multicast information of the multicast group to which the STA belongs in this embodiment from the AP in a receiving interval corresponding to the multicast group to which the STA belongs in this embodiment, where the DTIM beacon frame is used to indicate the multicast group which have multicast information to be sent.

The memory 1502 is connected to the receiver 1501, and is configured to store the multicast information of the multicast group to which the STA belongs in this embodiment, where the multicast information is received by the receiver 1501.

The STA provided in this embodiment may be configured to implement the corresponding procedure of the multicast information receiving method provided in the preceding embodiment. Detailed working principles of the AP are not given here any further and reference may be made to the descriptions in the method embodiment.

The STA in this embodiment collaborates with the AP provided in the preceding embodiment, and receives the DTIM beacon frame sent by the AP, and, as indicated by the DTIM beacon frame, knows the multicast groups which have multicast information to be sent, and then the STA receives, according to the order of the multicast ID of the multicast group to which the STA belongs in the multicast IDs of the multicast groups which have multicast information to be sent, its own multicast information from the AP in the receiving interval corresponding to the multicast group to which the STA belongs, without receiving the multicast information of other multicast groups, thereby solving the problem that the STA needs to receive all multicast information after a beacon frame after receiving the beacon frame in the prior art, and reducing STA resource waste caused by the problem.

FIG. 16 is a schematic structural diagram of an AP according to still another embodiment of the present invention. As shown in FIG 16, the AP in this embodiment includes a determining module 1601 and a tenth sending module 1602.

The determining module 1601 is configured to determine a multicast identifier ID of a multicast group to which a STA belongs, where the multicast ID of the multicast group to which the STA belongs is mapped to an AID.

The tenth sending module 1602 is connected to the determining module 1601, and is configured to send the multicast ID of the multicast group to which the STA belongs to the STA, where the multicast ID is determined by the determining module 1601.

In an optional implementation manner, the determining module 1601 is specifically configured to map the multicast ID of the multicast group to which the STA belongs into any page, block, or sub-block in the AID, for example, the determining module 1601 is specifically configured to map the multicast ID of the multicast group to which the STA belongs into any page, block, and/or sub-block in the AID; or the determining module 1601 is specifically configured to map the multicast ID of the multicast group to which the STA belongs into a pre-specified page, block, and/or sub-block in the AID; or
the determining module 1601 is specifically configured to map the multicast ID of the multicast group to which the STA belongs into blocks and sub-blocks in at least two AIDs, for example, the determining module 1601 is specifically configured to map the multicast ID of the multicast group to which the STA belongs into different pages, blocks, and/or sub-blocks in at least two AIDs; or the determining module 1601 is specifically configured to map the multicast ID of the multicast group to which the STA belongs into the same page, block, and/or sub-block in at least two AIDs.

In an optional implementation manner, the tenth sending module 1602 is specifically configured to encapsulate the multicast ID of the multicast group to which the STA belongs into a management frame or a control frame, and send the frame to the STA, where the control frame or management frame may be newly added; or
the tenth sending module 1602 is specifically configured to add a new IE into a management frame or a control frame or a data frame, and encapsulate the multicast ID of the multicast group to which the STA belongs into the new IE and send the management frame or control frame or data frame to the STA, where the management frame, control frame or data frame may be already existent.

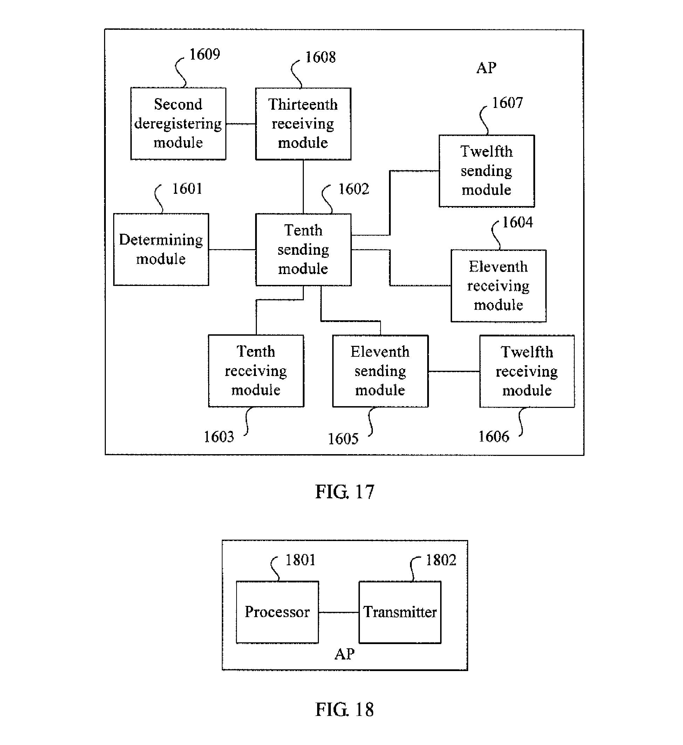

In an optional implementation manner, as shown in FIG 17, the AP in this embodiment further includes a tenth receiving module 1603. The tenth receiving module 1603 is configured to receive information for requesting the multicast ID sent by the STA. Therefore, the tenth sending module 1602 is specifically configured to send the multicast ID of the multicast group to which the STA belongs to the STA according to the information for requesting the multicast ID received by the tenth receiving module 1603. Optionally, the tenth sending module 1602 is also connected to the tenth receiving module 1603.

Optionally, the tenth receiving module 1603 is specifically configured to receive a request message sent by the STA, where the request message includes the information for requesting the multicast ID; or
the tenth receiving module 1603 is specifically configured to receive an existing control frame or an existing management frame or an existing data frame sent by the STA, where a new information element IE in the existing control frame or the existing management frame or the existing data frame includes the information for requesting the multicast ID.

In an optional implementation manner, as shown in FIG 17, the AP in this embodiment further includes an eleventh receiving module 1604. The eleventh receiving module 1604 is configured to receive an acknowledge message from the STA after the tenth sending module 1602 sends the multicast ID of the multicast group to which the STA belongs to the STA. Optionally, the eleventh receiving module 1604 is connected to the tenth sending module 1602.

In an optional implementation manner, as shown in FIG 17, the AP in this embodiment further includes an eleventh sending module 1605. The eleventh sending module 1605 is configured to: after the tenth sending module 1602 sends the multicast ID of the multicast group to which the STA belongs to the STA, send a multicast ID change message to the STA, where the multicast ID change message includes a changed multicast ID of the multicast group to which the STA belongs. The eleventh sending module 1605 is connected to the tenth sending module 1602.

In an optional implementation manner, as shown in FIG. 17, the AP in this embodiment further includes a twelfth receiving module 1606. The twelfth receiving module 1606 is configured to receive the multicast ID change request sent by the STA. Therefore, the eleventh sending module 1605 is specifically configured to send the multicast ID change message to the STA according to the multicast ID change request received by the twelfth receiving module 1606. The eleventh sending module 1605 is connected to the twelfth receiving module 1606.

In an optional implementation manner, as shown in FIG 17, the AP in this embodiment further includes a twelfth sending module 1607. The twelfth sending module 1607 is configured to: after the tenth sending module 1602 sends the multicast ID of the multicast group to which the STA belongs to the STA, send a multicast ID deregistration message to the STA, where the multicast ID deregistration message includes a multicast ID deregistration indication of deregistering the multicast ID of the multicast group to which the STA belongs. Optionally, the twelfth sending module 1607 is connected to the tenth sending module 1602.

In an optional implementation manner, as shown in FIG. 17, the AP in this embodiment further includes a thirteenth receiving module 1608 and a second deregistering module 1609.

The thirteenth receiving module 1608 is configured to receive a multicast ID deregistration request from the STA after the tenth sending module 1602 sends the multicast ID of the multicast group to which the STA belongs to the STA. Optionally, the thirteenth receiving module 1608 is connected to the tenth sending module 1602.

The second deregistering module 1609 is connected to the thirteenth receiving module 1608 and is configured to deregister the multicast ID of the multicast group to which the STA belongs according to the multicast ID deregistration request received by the thirteenth receiving module 1608.

Function modules of the AP provided in this embodiment may be configured to implement the corresponding procedure of the multicast identifier sending method provided in the preceding embodiment. Detailed working principles of the modules are not given here any further and reference may be made to the descriptions in the method embodiment.

The AP provided in this embodiment uses an AID as a multicast ID of a multicast group, and sends the multicast ID of the multicast group to which the STA belongs to the STA, so that the STA can obtain the multicast ID of the multicast group to which the STA belongs. Therefore, by virtue of abundance of AID resources, the problem of restricted multicast applications caused by limited number of multicast cycles supported by an FSM ID in the prior art is solved to some extent. In addition, the AP provided in this embodiment uses the AID as the multicast ID of the multicast group, and therefore, the AID serving as the multicast ID can be specified directly without needing to negotiate with the STA, so that the implementation is relatively flexible.

FIG. 18 is a schematic structural diagram of an AP according to still another embodiment of the present invention. As shown in FIG. 18, the AP in this embodiment includes a processor 1801 and a transmitter 1802.

The processor 1801 is configured to determine a multicast identifier ID of a multicast group to which a STA belongs, where the multicast ID of the multicast group to which the STA belongs is mapped to an AID.

The transmitter 1802 is connected to the processor 1801, and is configured to send the multicast ID of the multicast group to which the STA belongs to the STA, where the multicast ID is determined by the processor 1801.

The AP provided in this embodiment may be configured to implement the corresponding procedure of the multicast identifier sending method provided in the preceding embodiment. Detailed working principles of the AP are not given here any further and reference may be made to the descriptions in the method embodiment.

The AP provided in this embodiment uses an AID as a multicast ID of a multicast group, and sends the multicast ID of the multicast group to which the STA belongs to the STA, so that the STA can obtain the multicast ID of the multicast group to which the STA belongs. Therefore, by virtue of abundance of AID resources, the problem of restricted multicast applications caused by limited number of multicast cycles supported by an FSM ID in the prior art is solved to some extent. In addition, the AP provided in this embodiment uses the AID as the multicast ID of the multicast group, and therefore, the AID serving as the multicast ID can be specified directly without needing to negotiate with the STA, so that the implementation is relatively flexible.

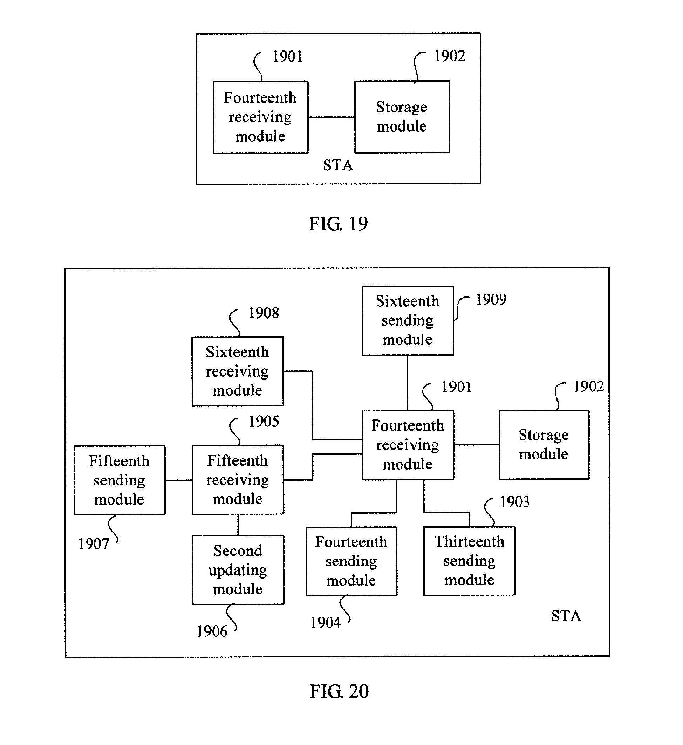

FIG 19 is a schematic structural diagram of a STA according to still another embodiment of the present invention. As shown in FIG 19, the STA in this embodiment includes a fourteenth receiving module 1901 and a storage module 1902.

The fourteenth receiving module 1901 is configured to receive a multicast identifier ID of a multicast group to which the STA belongs in this embodiment from an AP, where the multicast ID of the multicast group to which the STA belongs in this embodiment is mapped to an AID.

The storage module 1902 is connected to the fourteenth receiving module 1901, and is configured to record the multicast ID of the multicast group to which the STA belongs in this embodiment, where the multicast ID is received by the fourteenth receiving module 1901.

In an optional implementation manner, the fourteenth receiving module 1901 is specifically configured to receive a management frame or a control frame sent by the AP, where the management frame or the control frame includes the multicast ID of the multicast group to which the STA belongs in this embodiment, where the management frame or control frame may be newly added; or
the fourteenth receiving module 1901 is specifically configured to receive an existing management frame or an existing control frame or an existing data frame sent by the AP, where a new IE in the existing management frame or the existing control frame or the existing data frame includes the multicast ID of the multicast group to which the STA belongs in this embodiment.

In an optional implementation manner, as shown in FIG 20, the STA in this embodiment further includes a thirteenth sending module 1903. The thirteenth sending module 1903 is configured to send information for requesting the multicast ID to the AP. Therefore, the fourteenth receiving module 1901 is specifically configured to receive the multicast ID of the multicast group to which the STA belongs in this embodiment, where the multicast ID is sent by the AP according to the information for requesting the multicast ID. Optionally, the thirteenth sending module 1903 is connected to the fourteenth receiving module 1901.

Optionally, the thirteenth sending module 1903 is specifically configured to encapsulate the information for requesting the multicast ID into a request message, and sends the request message to the AP; or
the thirteenth sending module 1903 is specifically configured to add a new IE into an existing control frame or an existing management frame or an existing data frame, and encapsulate the information for requesting the multicast ID into the new IE and send the existing control frame or existing management frame or existing data frame to the AP.

In an optional implementation manner, as shown in FIG 20, the STA in this embodiment further includes a fourteenth sending module 1904. The fourteenth sending module 1904 is configured to send an acknowledge message to the AP after the fourteenth receiving module 1901 receives the multicast identifier ID of the multicast group to which the STA belongs in this embodiment. Optionally, the fourteenth sending module 1904 is connected to the fourteenth receiving module 1901.

In an optional implementation manner, as shown in FIG 20, the STA in this embodiment further includes a fifteenth receiving module 1905 and a second updating module 1906.

The fifteenth receiving module 1905 is configured to: after the fourteenth receiving module 1901 receives the multicast identifier ID of the multicast group to which the STA belongs in this embodiment, receive a multicast ID change message sent by the AP, where the multicast ID change message includes a changed multicast ID of the multicast group to which the STA belongs in this embodiment. Optionally, the fifteenth receiving module 1905 is connected to the fourteenth receiving module 1901.

The second updating module 1906 is connected to the fifteenth receiving module 1905, and is configured to update the multicast ID of the multicast group to which the STA belongs in this embodiment according to the changed multicast ID of the multicast group to which the STA belongs in this embodiment, which is included in the multicast ID change message received by the fifteenth receiving module 1905.

In an optional implementation manner, as shown in FIG 20, the STA in this embodiment further includes a fifteenth sending module 1907. The fifteenth sending module 1907 is configured to send a multicast ID change request to the AP. Therefore, the fifteenth receiving module 1905 is specifically configured to receive the multicast ID change message sent according to the multicast ID change request by the AP. Optionally, the fifteenth sending module 1907 is connected to the fifteenth receiving module 1905.

In an optional implementation manner, as shown in FIG 20, the STA in this embodiment further includes a sixteenth receiving module 1908. The sixteenth receiving module 1908 is configured to: after the fourteenth receiving module 1901 receives the multicast identifier ID of the multicast group to which the STA belongs in this embodiment, receive a multicast ID deregistration message sent by the AP, where the multicast ID deregistration message includes a deregistration indication of deregistering the multicast ID of the multicast group to which the STA belongs in this embodiment. Optionally, the sixteenth receiving module 1908 is connected to the fourteenth receiving module 1901.

In an optional implementation manner, as shown in FIG 20, the STA in this embodiment further includes a sixteenth sending module 1909. The sixteenth sending module 1909 is configured to: after the fourteenth receiving module 1901 receives the multicast identifier ID of the multicast group to which the STA belongs in this embodiment, send a multicast ID deregistration request to the AP, so that the AP deregisters the multicast ID of the multicast group to which the STA belongs in this embodiment according to the multicast ID deregistration request. Optionally, the sixteenth sending module 1909 is connected to the fourteenth receiving module 1901.

Function modules of the STA provided in this embodiment may be configured to implement the corresponding procedure of the multicast identifier receiving method provided in the preceding embodiment. Detailed working principles of the modules are not given here any further and reference may be made to the descriptions in the method embodiment.

The STA provided in this embodiment collaborates with the AP provided in the preceding embodiment, uses an AID as a multicast ID of a multicast group, receives the multicast ID of the multicast group to which the STA belongs from the AP, and makes use of abundance of AID resources, so that the problem of restricted multicast applications caused by limited number of multicast cycles supported by an FSM ID in the prior art is solved to some extent. In addition, the STA provided in this embodiment uses the AID as the multicast ID of the multicast group, without needing to negotiate with the AP, so that the implementation is relatively flexible.

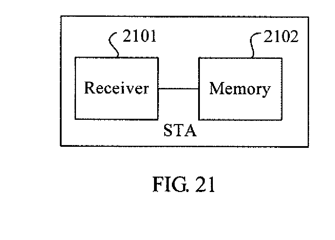

FIG 21 is a schematic structural diagram of a STA according to still another embodiment of the present invention. As shown in FIG 21, the STA in this embodiment includes a receiver 2101 and a memory 2102.

The receiver 2101 is configured to receive a multicast identifier ID of a multicast group to which the STA belongs in this embodiment from an AP, where the multicast ID of the multicast group to which the STA belongs in this embodiment is mapped to an AID.

The memory 2102 is connected to the receiver 2101, and is configured to record the multicast ID of the multicast group to which the STA belongs in this embodiment, where the multicast ID is received by the receiver 2101.

The STA provided in this embodiment may be configured to implement the corresponding procedure of the multicast identifier receiving method provided in the preceding embodiment. Detailed working principles of the AP are not given here any further and reference may be made to the descriptions in the method embodiment.

The STA provided in this embodiment collaborates with the AP provided in the preceding embodiment, uses an AID as a multicast ID of a multicast group, receives the multicast ID of the multicast group to which the STA belongs from the AP, and makes use of abundance of AID resources, so that the problem of restricted multicast applications caused by limited number of multicast cycles supported by an FSM ID in the prior art is solved to some extent. In addition, the STA provided in this embodiment uses the AID as the multicast ID of the multicast group, without needing to negotiate with the AP, so that the implementation is relatively flexible.

Persons of ordinary skill in the art may understand that, all or a part of the steps of the foregoing method embodiments may be implemented by a program instructing relevant hardware. The foregoing programs may be stored in a computer readable storage medium. When the program runs, the steps of the forgoing method embodiments are performed. The foregoing storage medium includes various mediums capable of storing program code, such as a ROM, a RAM, a magnetic disk, or an optical disc.

Finally, it should be noted that the foregoing embodiments are merely intended for describing the technical solutions of the present invention, rather than limiting the present invention. Although the present invention is described in detail with reference to the foregoing embodiments, persons of ordinary skill in the art should understand that, they may still make modifications to the technical solutions described in the foregoing embodiments, or make equivalent replacements to some or all the technical features thereof, as long as these modifications or replacements do not cause the essence of corresponding technical solutions depart from the spirit and scope of the technical solutions of the embodiments of the present invention.

## Claims

1. A multicast information sending method, comprising:
sending a delivery traffic indication map DTIM beacon frame to a station STA, wherein the DTIM beacon frame is used to indicate multicast groups which have multicast information to be sent; and
according to an order of multicast identifiers IDs of the multicast groups which have the multicast information to be sent, in preset sending intervals, sending the multicast information of the multicast group which have the multicast information to be sent, so that the STA receives multicast information of a multicast group to which the STA belongs in a receiving interval corresponding to the multicast group to which the STA belongs.

2. The multicast information sending method according to claim 1, wherein: before the sending a delivery traffic indication map DTIM beacon frame to a station STA, the method further comprises:
sending a multicast ID of the multicast group to which the STA belongs to the STA.

3. The multicast information sending method according to claim 2, wherein: before the sending a multicast ID of the multicast group to which the STA belongs to the STA, the method comprises:
mapping the multicast ID of the multicast group to which the STA belongs to an association identifier AID.

4. The multicast information sending method according to claim 3, wherein the mapping the multicast ID of the multicast group to which the STA belongs to an AID comprises:
mapping the multicast ID of the multicast group to which the STA belongs into a page, a block, or a sub-block in the AID; or mapping the multicast ID of the multicast group to which the STA belongs into blocks and sub-blocks in at least two AIDs.

5. The multicast information sending method according to any one of claims 3 to 4, wherein the DTIM beacon frame being used to indicate multicast groups which have multicast information to be sent comprises:
using a partial virtual bitmap in the DTIM beacon frame to indicate the multicast groups which have the multicast information to be sent.

6. The multicast information sending method according to any one of claims 1 to 5, wherein the preset sending interval is average sending duration of multicast information or a beacon frame interval.

7. A multicast information receiving method, comprising:
receiving, by a station STA, a delivery traffic indication map DTIM beacon frame sent by a radio access point AP, wherein the DTIM beacon frame is used to indicate multicast groups which have multicast information to be sent; and
receiving, by the STA according to an order of a multicast identifier ID of a multicast group to which the STA belongs in multicast IDs of the multicast groups which have the multicast information to be sent, multicast information of the multicast group to which the STA belongs from the AP in a receiving interval corresponding to the multicast group to which the STA belongs.

8. The multicast information receiving method according to claim 7, wherein the receiving interval is average sending duration of multicast information or a beacon frame interval.

9. The multicast information receiving method according to claim 7, wherein a multicast ID of each multicast group which has multicast information to be sent is an association identifier AID.

10. The multicast information receiving method according to claim 7, wherein the DTIM beacon frame being used to indicate multicast groups which have multicast information to be sent comprises:
using a partial virtual bitmap in the DTIM to indicate the multicast groups which have the multicast information to be sent.

11. The multicast information receiving method according to any one of claims 7 to 10, wherein: before the receiving, by a station STA, a delivery traffic indication map DTIM beacon frame sent by a radio access point AP, the method comprises:
receiving, by the STA, the multicast ID of the multicast group to which the STA belongs from the AP.

12. A multicast identifier sending method, comprising:
determining a multicast identifier ID of a multicast group to which a station STA belongs, wherein the multicast ID of the multicast group to which the STA belongs is mapped to an association identifier AID; and
sending the multicast ID of the multicast group to which the STA belongs to the STA.

13. The multicast identifier sending method according to claim 12, wherein the mapping the multicast ID of the multicast group to which the STA belongs to an AID comprises:
mapping the multicast ID of the multicast group to which the STA belongs into a page, a block, or a sub-block in the AID; or mapping the multicast ID of the multicast group to which the STA belongs into blocks and sub-blocks in at least two AIDs.

14. The multicast identifier sending method according to claim 12 or 13, wherein the sending the multicast ID of the multicast group to which the STA belongs to the STA comprises:
encapsulating the multicast ID of the multicast group to which the STA belongs into a management frame or a control frame, and sending the frame to the STA; or
adding a new information element IE into an existing management frame or an existing control frame or an existing data frame, and encapsulating the multicast ID of the multicast group to which the STA belongs into the new IE and sending the existing management frame or the existing control frame or the existing data frame to the STA.

15. The multicast identifier sending method according to any one of claims 12 to 14, wherein the sending the multicast ID of the multicast group to which the STA belongs to the STA comprises:
receiving information for requesting the multicast ID sent by the STA; and
sending the multicast ID of the multicast group to which the STA belongs to the STA according to the information for requesting the multicast ID.

16. The multicast identifier sending method according to claim 15, wherein the receiving information for request the multicast ID sent by the STA comprises:
receiving a request message sent by the STA, wherein the request message comprises the information for requesting the multicast ID; or
receiving the existing control frame or the existing management frame or the existing data frame sent by the STA, wherein the new information element IE in the existing control frame or the existing management frame or the existing data frame comprises the information for requesting the multicast ID.

17. The multicast identifier sending method according to any one of claims 13 to 16, wherein: after the sending the multicast ID of the multicast group to which the STA belongs to the STA, the method comprises:
sending a multicast ID deregistration message to the STA, wherein the multicast ID deregistration message comprises a deregistration indication of deregistering the multicast ID of the multicast group to which the STA belongs.

18. A multicast identifier receiving method, comprising:
receiving, by a station STA, a multicast identifier ID of a multicast group to which the STA belongs from a radio access point AP, wherein the multicast ID of the multicast group to which the STA belongs is mapped to an association identifier AID; and
recording, by the STA, the multicast ID of the multicast group to which the STA belongs.

19. The multicast identifier receiving method according to claim 18, wherein: the receiving, by a station STA, a multicast identifier ID of a multicast group to which the STA belongs from a radio access point AP comprises:
receiving, by the STA, a management frame or a control frame sent by the AP, wherein the management frame or the control frame comprises the multicast ID of the multicast group to which the STA belongs; or
receiving, by the STA, an existing management frame or an existing control frame or an existing data frame sent by the AP, wherein a new information element IE in the existing management frame or the existing control frame or the existing data frame comprises the multicast ID of the multicast group to which the STA belongs.

20. The multicast identifier receiving method according to claim 18, wherein: the receiving, by a station STA, a multicast identifier ID of a multicast group to which the STA belongs from a radio access point AP comprises:
sending, by the STA, information for requesting the multicast ID to the AP; and
receiving, by the STA, the multicast ID of the multicast group to which the STA belongs, wherein the multicast ID is sent by the AP according to the information for requesting the multicast ID.

21. The multicast identifier receiving method according to claim 20, wherein the sending, by the STA, information for requesting the multicast ID to the AP comprises:
encapsulating, by the STA, the information for requesting the multicast ID into a request message, and sending the request message to the AP; or
adding, by the STA, a new information element IE into an existing control frame or an existing management frame or an existing data frame, and encapsulating the information for requesting the multicast ID into the new IE and sending the existing control frame or the existing management frame or the existing data frame to the AP.

22. A radio access point AP, comprising:
a first sending module, configured to send a delivery traffic indication map DTIM beacon frame to a station STA, wherein the DTIM beacon frame is used to indicate multicast groups which have multicast information to be sent; and
a second sending module, configured to: according to an order of multicast identifiers IDs of the multicast groups which have the multicast information to be sent, in preset sending intervals, send the multicast information of the multicast groups which have the multicast information to be sent, so that the STA receives multicast information of a multicast group to which the STA belongs in a receiving interval corresponding to the multicast group to which the STA belongs.

23. The AP according to claim 22, further comprising:
a third sending module, configured to send the multicast ID of the multicast group to which the STA belongs to the STA before the first sending module sends the DTIM beacon frame to the STA.

24. The AP according to claim 23, further comprising:
a mapping module, configured to map the multicast ID of the multicast group to which the STA belongs to an association identifier AID before the third sending module sends the multicast ID of the multicast group to which the STA belongs to the STA.

25. The AP according to claim 24, wherein the mapping module being configured to map the multicast ID of the multicast group to which the STA belongs to an association
identifier AID comprises:
mapping, by the mapping module, the multicast ID of the multicast group to which the STA belongs into a page, a block, or a sub-block in the AID; or mapping the multicast ID of the multicast group to which the STA belongs into blocks and sub-blocks in at least two AIDs.

26. The AP according to any one of claims 22 to 25, wherein the DTIM beacon frame being used to indicate multicast groups which have multicast information to be sent comprises:
using a partial virtual bitmap in the DTIM beacon frame to indicate the multicast groups which have the multicast information to be sent.

27. A station STA, comprising:
a fifth receiving module, configured to receive a delivery traffic indication map DTIM beacon frame sent by a radio access point AP, wherein the DTIM beacon frame is used to indicate multicast groups which have multicast information to be sent; and
a sixth receiving module, configured to receive, according to an order of a multicast identifier ID of a multicast group to which the STA belongs in multicast IDs of the multicast groups which have the multicast information to be sent, multicast information of the multicast group to which the STA belongs from the AP in a receiving interval corresponding to the multicast group to which the STA belongs.

28. The STA according to claim 27, wherein the receiving interval is average sending duration of multicast information or a beacon frame interval.

29. The STA according to claim 27, wherein a multicast ID of each multicast group which has multicast information to be sent is an association identifier AID.

30. The STA according to claim 29, wherein the DTIM beacon frame being used to indicate multicast groups which have multicast information to be sent comprises:
using a partial virtual bitmap in the DTIM beacon frame to indicate the multicast groups which have the multicast information to be sent.

31. The STA according to any one of claims 27 to 30, further comprising:
a seventh receiving module, configured to receive the multicast ID of the multicast group to which the STA belongs from the AP before the fifth receiving module receives the DTIM beacon frame.

32. A radio access point AP, comprising:
a determining module, configured to determine a multicast identifier ID of a multicast group to which a station STA belongs, wherein the multicast ID of the multicast group to which the STA belongs is mapped to an association identifier AID; and
a tenth sending module, configured to send the multicast ID of the multicast group to which the STA belongs to the STA.

33. The AP according to claim 32, wherein the determining module being configured to map the multicast ID of the multicast group to which the STA belongs to an AID comprises:
the determining module being specifically configured to map the multicast ID of the multicast group to which the STA belongs into any page, block, or sub-block in the AID; or map the multicast ID of the multicast group to which the STA belongs into blocks and sub-blocks in at least two AIDs.

34. The AP according to claim 32 or 33, wherein the tenth sending module is specifically configured to encapsulate the multicast ID of the multicast group to which the STA belongs into a management frame or a control frame, and send the frame to the STA; or
the tenth sending module is specifically configured to add a new information element IE into a management frame or a control frame or a data frame, and encapsulate the multicast ID of the multicast group to which the STA belongs into the new IE and send the management frame or the control frame or the data frame to the STA.

35. The AP according to any one of claims 32 to 34, further comprising:
a tenth receiving module, configured to receive information for requesting the multicast ID sent by the STA, wherein
the tenth sending module is specifically configured to send the multicast ID of the multicast group to which the STA belongs to the STA according to the information for requesting the multicast ID.

36. The AP according to claim 35, wherein the tenth receiving module is specifically configured to receive a request message sent by the STA, wherein the request message comprises the information for requesting the multicast ID; or
the tenth receiving module is specifically configured to receive an existing control frame or an existing management frame or an existing data frame sent by the STA, wherein a new information element IE in the existing control frame or the existing management frame or the existing data frame comprises the information for requesting the multicast ID.

37. The AP according to any one of claims 32 to 36, further comprising:
a twelfth sending module, configured to: after the tenth sending module sends the multicast ID of the multicast group to which the STA belongs to the STA, send a multicast ID deregistration message to the STA, wherein the multicast ID deregistration message comprises a deregistration indication of deregistering the multicast ID of the multicast group to which the STA belongs.

38. A station STA, comprising:
a fourteenth receiving module, configured to receive a multicast identifier ID of a multicast group to which the STA belongs from a radio access point AP, wherein the multicast ID of the multicast group to which the STA belongs is mapped to an association identifier AID; and
a storage module, configured to record the multicast ID of the multicast group to which the STA belongs.

39. The STA according to claim 38, wherein the fourteenth receiving module is specifically configured to receive a management frame or a control frame sent by the AP, wherein the management frame or the control frame comprises the multicast ID of the multicast group to which the STA belongs; or
the fourteenth receiving module is specifically configured to receive an existing management frame or an existing control frame or an existing data frame sent by the AP, wherein a new information element IE in the existing management frame or the existing control frame or the existing data frame comprises the multicast ID of the multicast group to which the STA belongs.

40. The STA according to claim 38, further comprising:
a thirteenth sending module, configured to send information for requesting the multicast ID to the AP, wherein
the fourteenth receiving module is specifically configured to receive the multicast ID of the multicast group to which the STA belongs, wherein the multicast ID is sent by the AP according to the information for requesting the multicast ID.

41. The STA according to claim 39, wherein the thirteenth sending module is specifically configured to encapsulate the information for requesting the multicast ID into a request message, and send the request message to the AP; or
the thirteenth sending module is specifically configured to add a new information element IE into an existing control frame or an existing management frame or an existing data frame, and encapsulate the information for requesting the multicast ID into the new IE and send the existing control frame or the existing management frame or the existing data frame to the AP.

42. The STA according to any one of claims 38 to 41, further comprising:
a fifteenth receiving module, configured to: after the fourteenth receiving module receives the multicast identifier ID of the multicast group to which the STA belongs, receive a multicast ID change message sent by the AP, wherein the multicast ID change message comprises a changed multicast ID of the multicast group to which the STA belongs; and
a second updating module, configured to update the multicast ID of the multicast group to which the STA belongs according to the changed multicast ID of the multicast group to which the STA belongs, which is comprised in the multicast ID change message.

43. The STA according to any one of claims 38 to 41, further comprising:
a sixteenth receiving module, configured to: after the fourteenth receiving module receives the multicast identifier ID of the multicast group to which the STA belongs, receive a multicast ID deregistration message sent by the AP, wherein the multicast ID deregistration message comprises a deregistration indication of deregistering the multicast ID of the multicast group to which the STA belongs.
